# EUROPEAN PATENT SPECIFICATION

(11) **EP 4 584 929 B1**
(45) Date of publication and mention of the grant of the patent: **11.11.2026**
(21) Application number: 23765586.5
(22) Date of filing: 17.08.2023
(51) Int. Cl.: H04L 9/06, H04L 9/32, H04L 9/40, H04W 12/12

(54) **INTERFERENCE DETECTION AND SECURE RANGING IN ULTRAWIDEBAND**
INTERFERENZDETEKTION UND SICHERE ENTFERNUNGSMESSUNG IN EINEM ULTRABREITBAND
DÉTECTION D'INTERFÉRENCE ET TÉLÉMÉTRIE SÉCURISÉE DANS UNE BANDE ULTRA-LARGE

(30) Priority: 07.09.2022 GR 20220100732
(43) Date of publication of application: 16.07.2025
(60) Divisional application: 26209566.4
(73) Proprietor: Qualcomm Incorporated, San Diego, CA 92121-1714 (US)
(72) Inventor: REDDY, Varun, Amar, San Diego, CA 92121 (US); MANOLAKOS, Alexandros, San Diego, CA 92121 (US); PAKROOH, Pooria, San Diego, CA 92121 (US); MUKKAVILLI, Krishna, Kiran, San Diego, CA 92121 (US)
(74) Representative: Reddie & Grose LLP
(86) International application number: PCT/US2023/030449
(87) International publication number: WO 2024/054340

(56) References cited:
- US-A1- 2021 014 677
- US-A1- 2022 200 656
- PATRICK LEU ET AL: "Ghost Peak: Practical Distance Reduction Attacks Against HRP UWB Ranging", ARXIV.ORG, CORNELL UNIVERSITY LIBRARY, 201 OLIN LIBRARY CORNELL UNIVERSITY ITHACA, NY 14853, 9 November 2021 (2021-11-09), XP091097748

## Description

### BACKGROUND

The use of wireless devices for many everyday activities is becoming common. Modern wireless devices may make use of one or more wireless communication technologies. For example, a wireless device may communicate using a short range communication technology such as Bluetooth technology, ultrawideband (UWB) technology, millimeter wave (mmWave) technology, etc. The use of short range communication technologies, such as Bluetooth, in wireless devices has become much more common in the last several years and is regularly used in retail businesses, offices, homes, cars, manufacturing operations, and public gathering places. The larger bandwidth of UWB devices may be beneficial for ranging protocols used in high security applications such as digital keys. The range accuracy associated with UWB devices may degrade in some use cases such as at long range or when the line of sight between the UWB devices is obstructed. Some ranging messaging may be susceptible to over-the-air attacks to falsify time-of-arrival estimates. There is a need to improve the ranging accuracy and security for UWB devices to support multiple use cases. US 2022/200656 Al (SUBRAVETI DIWAKAR [IN] ET AL) 23 June 2022 (2022-06-23) discloses UWB ranging methods and apparatus. It discloses communication with a plurality of responder devices, the ranging communication comprising: transmitting, by an initiator device, a polling signal in a time slot; receiving a respective response from each of the plurality of responder devices, overlapping and in a next time slot, each response comprising: synchronization bits, and a frame comprising Start of Frame Delimiter, and a Scrambled Timestamp Sequence; wherein the STS comprises a sequence of segments each preceded by a respective guard interval, wherein a specific one of the segments comprises data derived from a ranging key and a responder-identifier each unique to the respective responder among the plurality of responders, wherein a sequence-number of the specific segment is unique to the respective response, and wherein a remainder of the segments each comprise the same data derived from a predetermined common key and predetermined common data.

### SUMMARY

The invention is defined in the appended claims to which reference should now be made. Preferable features are defined in the appended claims. In the following description, features following the modal verb "may" should be considered as mandatory if they form part of an independent claim. However, an example method for determining an integrity of an ultrawideband (UWB) ranging signal according to the disclosure includes providing scrambled timestamp sequence information and a secure sequence to a wireless node via a first radio access technology, transmitting one or more initiator data packets to the wireless node via a second radio access technology based at least in part on the scrambled timestamp sequence information, receiving one or more responder data packets from the wireless node via the second radio access technology, computing a time of arrival estimate based on a correlation of the one or more received responder data packets with the scrambled timestamp sequence information and the secure sequence, and determining the integrity of the time of arrival estimate based at least in part on the correlation of the one or more received responder data packets with the scrambled timestamp sequence information and the secure sequence.

Implementations of such a method may include one or more of the following features. The first radio access technology may be based on at least one of a WiFi protocol, a Bluetooth protocol, and a cellular network protocol. The scrambled timestamp sequence information may include a key value and a counter value associated with an encryption procedure. The one or more initiator data packets and the one or more responder data packets may utilize a physical protocol data unit frame configuration. Computing the time of arrival estimate may include identifying a peak value based on the correlation of the one or more received responder data packets with the scrambled timestamp sequence information and the secure sequence, and determining a time value associated with the peak value. Determining the integrity of the time of arrival estimate may include identifying a single peak value based on the correlation of the one or more received responder data packets with the scrambled timestamp sequence information and the secure sequence. The method may include determining that the single peak value exceeds a threshold value. Determining the integrity of the time of arrival estimate may include determining a peak-to-sidelobe ratio based on the correlation of the one or more received responder data packets with the scrambled timestamp sequence information and the secure sequence. Determining the integrity of the time of arrival estimate may include determining a statistical value associated with the correlation of the one or more received responder data packets with the scrambled timestamp sequence information and the secure sequence in a time domain. A controller sequence that is orthogonal to the secure sequence may be computed, such that determining the integrity of the time of arrival estimate includes performing a generalized operation with the controller sequence and the correlation of the one or more received responder data packets with the scrambled timestamp sequence information and the secure sequence.

An example method for transmitting a secure ultawideband (UWB) ranging signal according to the disclosure includes receiving scrambled timestamp sequence information and a secure sequence from a wireless node via a first radio access technology, receiving one or more initiator data packets from the wireless node via a second radio access technology, generating one or more responder data packets based on the received one or more initiator data packets and the secure sequence, and transmitting the one or more responder data packets to the wireless node via the second radio access technology.

Implementations of such a method may include one or more of the following features. The first radio access technology may be based on at least one of a WiFi protocol, a Bluetooth protocol, and a cellular network protocol. The scrambled timestamp sequence information may include a key value and a counter value associated with an encryption procedure. The one or more initiator data packets and the one or more responder data packets utilize a physical protocol data unit frame configuration. A length of the secure sequence is at least the length of a scrambled timestamp sequence in the one or more initiator data packets.

Items and/or techniques described herein may provide one or more of the following capabilities, as well as other capabilities not mentioned. UWB capable devices may be configured to exchange positioning signals to determine a distance between the devices (e.g., based on time-of-flight measurements) and a bearing to one another (e.g., based on angle-of-arrival measurements). The UWB capable devices may provide/receive security sequence information via out-of-band communications. An initiating UWB capable device may transmit an initiator ranging frame including a first sequence to a responding UWB capable device. The responding device may generate a responder ranging frame based on the first sequence and the security sequence, and transmit the responder ranging frame to the initiating UWB capable device. The initiating UWB device may correlate the received responder ranging frame based on the security sequence information to determine a time-of-arrival. The integrity of the responder ranging frame and the corresponding time-of-arrival value may be verified. Transmissions by an adversary attempting a replay attack may be discarded, and channel interference may be detected. The security of UWB ranging sessions may be improved. Other capabilities may be provided and not every implementation according to the disclosure must provide any, let alone all, of the capabilities discussed.

### BRIEF DESCRIPTION OF THE DRAWINGS

FIG. 1 is a block diagram of an example wireless local area network (WLAN).
FIG. 2 is a block diagram of components of an example wireless device.
FIG. 3A is a block diagram of components of an example access point.
FIG. 3B is a block diagram of components of an example ultrawideband (UWB) device.
FIG. 4 is a block diagram of an example communications module with multiple transceivers.
FIGS. 5A and 5B include example message flow diagrams used for Enhanced Ranging Devices (ERDEVs).
FIG. 6 is a diagram of an example ranging block for use in a UWB ranging session.
FIG. 7 is a diagram of an example physical protocol data unit (PPDU) frame configuration incorporating a sync preamble for ranging.
FIG. 8A is a diagram of example signal exchanges for UWB ranging.
FIG. 8B is a diagram of an example angle of arrival of a UWB signal.
FIG. 9 is a diagram of an example replay attack to falsify a time-of-arrival estimate.
FIG. 10 is a block diagram of a process for generating a pseudo random number based on the Advanced Encryption Standard (AES).
FIGS. 11A and 11B depict example signal exchanges and a corresponding time-focusing effect based on correlating a time-reversed and conjugated version of a signal.
FIGS. 12A and 12B depict example signal exchanges utilizing interference detection and secure ranging signals and example signal plots.
FIG. 13 includes example illustrations of side lobes associated with the correlation of different signals.
FIG. 14 is an example process flow for determining the integrity of a UWB ranging signal.
FIG. 15 is an example process flow for transmitting a secure UWB ranging signal.

### DETAILED DESCRIPTION

Techniques are discussed herein for performing ranging operations with ultrawideband (UWB) devices in a network. UWB positioning technology may be utilized to provide accurate relative positioning between devices within a limited range (e.g., 100m). For example, two UWB devices may be configured to exchange UWB radio frequency signals to determine time-of-flight (ToF) and angle-of-arrival (AoA) information for the RF signals. UWB capable devices may be configured to utilize a 500MHz spectrum with 2 nanosecond (ns) pulses for position measurements. UWB may realize ToF ranging accuracy of approximately 7-10cm and an AoA accuracy of 1.5-3 degrees. UWB is resilient to multipath and may utilize super resolution algorithms to achieve millimeter level range accuracy. UWB utilizes less power than WiFi and can obtain better range accuracy then Bluetooth devices. In operation, however, some UWB ranging techniques may be susceptible to over-the-air attacks to falsify the ToA estimate. The techniques provided herein utilize out of band communications to increase the security of UWB ranging messages. In an example, spoofed signals transmitted by an attacker may be detected. The techniques may also be used to detect channel interference.

A controller and a controlee in a UWB ranging session may exchange messages to establish the parameters of the ranging messages. For example, the controller may control the ranging session and may define the ranging parameters by sending one or more Ranging Control Messages (RCMs). An RCM, or other messages, may be provided in a secure out-of-band transmission, such as via WiFi or Bluetooth communication links and may include a security sequence known only to the controller and the controlee. An initiator may generate a scrambled timestamp sequence (STS) and transmit one or more data packets based on the STS sequence. A responding station (i.e., the responder) may generate one or more responder data packets based on the STS sequence and the security sequence received via the out-of-band communication, and then transmit the one or more responder data packets to the initiator. The initiator may receive the one or more responder data packets and perform an integrity check on the received data packets. The integrity check may be based on one or more signal processing operations (e.g., convolution, dot product, etc.) utilizing the security sequence (e.g., which is known only to the initiator and the responder). The integrity check may determine a single signal peak to validate the received responder data packets. Other threshold values may be used as the integrity check. For example, a threshold peak-to-sidelobe ratio or a mean variance in the time domain may be used to determine the integrity of a received ranging signal. These techniques and configurations are examples, and other techniques and configurations may be used.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in other examples.

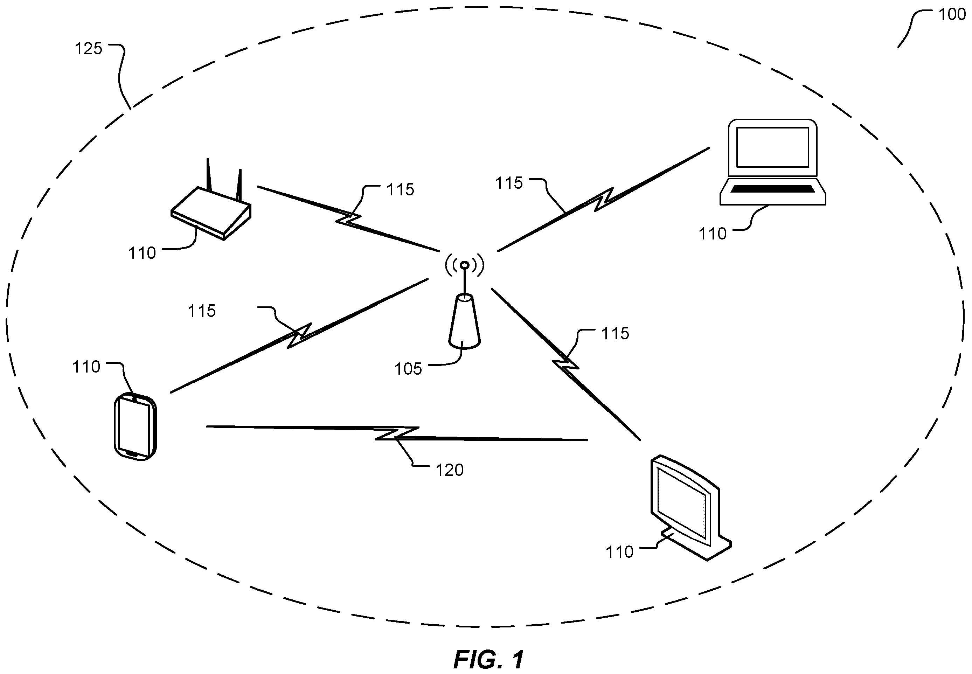

Referring to FIG. 1, a block diagram illustrates an example of a WLAN network 100 such as, e.g., a network implementing IEEE 802.11 and IEEE 802.15 families of standards. The WLAN network 100 may include an access point (AP) 105 and one or more wireless devices 110 or stations (STAs) 110, such as mobile stations, head mounted devices (HMDs), personal digital assistants (PDAs), asset tracking devices, other handheld devices, netbooks, notebook computers, tablet computers, laptops, display devices (e.g., TVs, computer monitors, etc.), printers, IoT devices, asset tags, key fobs, vehicles, etc. The AP 105 and the wireless devices 110 may be UWB capable devices. While one AP 105 is illustrated, the WLAN network 100 may have multiple APs 105. Each of the wireless devices 110, which may also be referred to as mobile stations (MSs), mobile devices, access terminals (ATs), user equipment(s) (UE), subscriber stations (SSs), or subscriber units, may associate and communicate with an AP 105 via a communication link 115. Each AP 105 has a geographic coverage area 125 such that wireless devices 110 within that area can typically communicate with the AP 105. The wireless devices 110 may be dispersed throughout the geographic coverage area 125. Each wireless device 110 may be stationary or mobile.

A wireless device 110 can be covered by more than one AP 105 and can therefore associate with one or more APs 105 at different times. A single AP 105 and an associated set of stations may be referred to as a basic service set (BSS). An extended service set (ESS) is a set of connected BSSs. A distribution system (DS) is used to connect APs 105 in an extended service set. A geographic coverage area 125 for an access point 105 may be divided into sectors making up a portion of the coverage area. The WLAN network 100 may include access points 105 of different types (e.g., metropolitan area, home network, etc.), with varying sizes of coverage areas and overlapping coverage areas for different technologies. In other examples, other wireless devices can communicate with the AP 105.

While the wireless devices 110 may communicate with each other through the AP 105 using communication links 115, each wireless device 110 may also communicate directly with one or more other wireless devices 110 via a direct wireless link 120. Two or more wireless devices 110 may communicate via a direct wireless link 120 when both wireless devices 110 are in the AP geographic coverage area 125 or when one or neither wireless device 110 is within the AP geographic coverage area 125. Examples of direct wireless links 120 may include WiFi Direct connections, connections established by using a WiFi Tunneled Direct Link Setup (TDLS) link, 5G-NR sidelink, PC5, UWB, Bluetooth, and other P2P group connections. The wireless devices 110 in these examples may communicate according to the WLAN radio and baseband protocol including physical and MAC layers from IEEE 802.11 and IEEE 802.15, and their various versions. For example, the one or more of the wireless devices 110 and the AP 105 may be configured to utilize WiFi, Bluetooth, and/or UWB signals for communications and/or positioning applications.

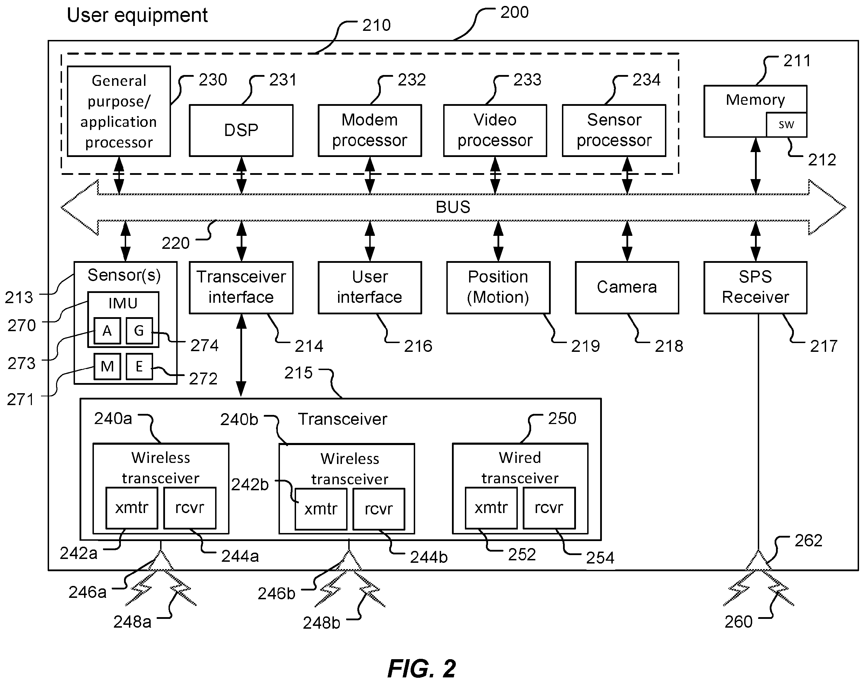

Referring also to FIG. 2, a UE 200 is an example of the wireless devices 110 and comprises a computing platform including a processor 210, memory 211 including software (SW) 212, one or more sensors 213, a transceiver interface 214 for a transceiver 215 (including one or more wireless transceivers such as a first wireless transceiver 240a, a second wireless transceiver 240b, and optionally a wired transceiver 250), a user interface 216, a Satellite Positioning System (SPS) receiver 217, a camera 218, and a position (motion) device 219. The processor 210, the memory 211, the sensor(s) 213, the transceiver interface 214, the user interface 216, the SPS receiver 217, the camera 218, and the position (motion) device 219 may be communicatively coupled to each other by a bus 220 (which may be configured, e.g., for optical and/or electrical communication). One or more of the shown apparatuses (e.g., the camera 218, the position (motion) device 219, and/or one or more of the sensor(s) 213, etc.) may be omitted from the UE 200. The processor 210 may include one or more hardware devices, e.g., a central processing unit (CPU), a microcontroller, an application specific integrated circuit (ASIC), etc. The processor 210 may comprise multiple processors including a general-purpose/ application processor 230, a Digital Signal Processor (DSP) 231, a modem processor 232, a video processor 233, and/or a sensor processor 234. One or more of the processors 230-234 may comprise multiple devices (e.g., multiple processors). For example, the sensor processor 234 may comprise, e.g., processors for radio frequency (RF) sensing and ultrasound. The modem processor 232 may support dual SIM/dual connectivity (or even more SIMs). For example, a SIM (Subscriber Identity Module or Subscriber Identification Module) may be used by an Original Equipment Manufacturer (OEM), and another SIM may be used by an end user of the UE 200 for connectivity. The memory 211 is a non-transitory storage medium that may include random access memory (RAM), flash memory, disc memory, and/or read-only memory (ROM), etc. The memory 211 stores the software (which may also include firmware) 212 which may be processor-readable, processor-executable software code containing instructions that are configured to, when executed, cause the processor 210 to perform various functions described herein. Alternatively, the software 212 may not be directly executable by the processor 210 but may be configured to cause the processor 210, e.g., when compiled and executed, to perform the functions. The description may refer to the processor 210 performing a function, but this includes other implementations such as where the processor 210 executes software and/or firmware. The description may refer to the processor 210 performing a function as shorthand for one or more of the processors 230-234 performing the function. The description may refer to the UE 200 performing a function as shorthand for one or more appropriate components of the UE 200 performing the function. The processor 210 may include a memory with stored instructions in addition to and/or instead of the memory 211. Functionality of the processor 210 is discussed more fully below.

The configuration of the UE 200 shown in FIG. 2 is an example and not limiting of the disclosure, including the claims, and other configurations may be used. For example, an example configuration of the UE includes one or more of the processors 230-234 of the processor 210, the memory 211, and the wireless transceivers 240a-b. Other example configurations include one or more of the processors 230-234 of the processor 210, the memory 211, the wireless transceivers 240a-b, and one or more of the sensor(s) 213, the user interface 216, the SPS receiver 217, the camera 218, the PMD 219, and/or the wired transceiver 250. Other configurations may not include all of the components of the UE 200. For example, an IoT device may include more wireless transceivers 240a-b, the memory 211 and a general-purpose processor 230. A multi-link device may simultaneously utilize the first wireless transceiver 240a on a first link using a first frequency band, and the second wireless transceiver 240b on a second link using a second frequency band. Additional transceivers may also be used for additional links and frequency bands and radio access technologies.

The UE 200 may comprise the modem processor 232 that may be capable of performing baseband processing of signals received and down-converted by the transceiver 215 and/or the SPS receiver 217. The modem processor 232 may perform baseband processing of signals to be upconverted for transmission by the transceiver 215. Also or alternatively, baseband processing may be performed by the general-purpose processor 230 and/or the DSP 231. Other configurations, however, may be used to perform baseband processing.

The UE 200 may include the sensor(s) 213 that may include, for example, an Inertial Measurement Unit (IMU) 270, one or more magnetometers 271, and/or one or more environment sensors 272. The IMU 270 may comprise one or more inertial sensors, for example, one or more accelerometers 273 (e.g., collectively responding to acceleration of the UE 200 in three dimensions) and/or one or more gyroscopes 274. The magnetometer(s) may provide measurements to determine orientation (e.g., relative to magnetic north and/or true north) that may be used for any of a variety of purposes, e.g., to support one or more compass applications. The environment sensor(s) 272 may comprise, for example, one or more temperature sensors, one or more barometric pressure sensors, one or more ambient light sensors, one or more camera imagers, and/or one or more microphones, etc. The sensor(s) 213 may generate analog and/or digital signals indications of which may be stored in the memory 211 and processed by the DSP 231 and/or the general-purpose processor 230 in support of one or more applications such as, for example, applications directed to positioning and/or navigation operations.

The sensor(s) 213 may be used in relative location measurements, relative location determination, motion determination, etc. Information detected by the sensor(s) 213 may be used for motion detection, relative displacement, dead reckoning, sensor-based location determination, and/or sensor-assisted location determination. The sensor(s) 213 may be useful to determine whether the UE 200 is fixed (stationary) or mobile. In another example, for relative positioning information, the sensors/IMU can be used to determine the angle and/or orientation of the other device with respect to the UE 200, etc.

The IMU 270 may be configured to provide measurements about a direction of motion and/or a speed of motion of the UE 200, which may be used in relative location determination. For example, the one or more accelerometers 273 and/or the one or more gyroscopes 274 of the IMU 270 may detect, respectively, a linear acceleration and a speed of rotation of the UE 200. The linear acceleration and speed of rotation measurements of the UE 200 may be integrated over time to determine an instantaneous direction of motion as well as a displacement of the UE 200. The instantaneous direction of motion and the displacement may be integrated to track a location of the UE 200. For example, a reference location of the UE 200 may be determined, e.g., using the SPS receiver 217 (and/or by some other means) for a moment in time and measurements from the accelerometer(s) 273 and gyroscope(s) 274 taken after this moment in time may be used in dead reckoning to determine present location of the UE 200 based on movement (direction and distance) of the UE 200 relative to the reference location.

The magnetometer(s) 271 may determine magnetic field strengths in different directions which may be used to determine orientation of the UE 200. For example, the orientation may be used to provide a digital compass for the UE 200. The magnetometer(s) 271 may include a two-dimensional magnetometer configured to detect and provide indications of magnetic field strength in two orthogonal dimensions. Also or alternatively, the magnetometer(s) 271 may include a three-dimensional magnetometer configured to detect and provide indications of magnetic field strength in three orthogonal dimensions. The magnetometer(s) 271 may provide means for sensing a magnetic field and providing indications of the magnetic field, e.g., to the processor 210.

The transceiver 215 may include wireless transceivers 240a-b and a wired transceiver 250 configured to communicate with other devices through wireless connections and wired connections, respectively. In an example, each of the wireless transceivers 240a-b may include respective transmitters 242a-b and receivers 244a-b coupled to one or more respective antennas 246a-b for transmitting and/or receiving wireless signals 248a-b and transducing signals from the wireless signals 248a-b to wired (e.g., electrical and/or optical) signals and from wired (e.g., electrical and/or optical) signals to the wireless signals 248a-b. Thus, the transmitters 242a-b may be the same transmitter, or may include multiple transmitters that may be discrete components or combined/integrated components, and/or the receivers 244a-b may be the same receiver, or may include multiple receivers that may be discrete components or combined/integrated components. The wireless transceivers 240a-b may be configured to communicate signals (e.g., with access points and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 3GPP LTE-V2X (PC5), IEEE 802.11 (including IEEE 802.11ax and 802.11be), WiFi, WiFi Direct (WiFi-D), Bluetooth^{®}, IEEE 802.15 (UWB), Zigbee etc. The wired transceiver 250 may include a transmitter 252 and a receiver 254 configured for wired communication. The transmitter 252 may include multiple transmitters that may be discrete components or combined/integrated components, and/or the receiver 254 may include multiple receivers that may be discrete components or combined/integrated components. The wired transceiver 250 may be configured, e.g., for optical communication and/or electrical communication. The transceiver 215 may be communicatively coupled to the transceiver interface 214, e.g., by optical and/or electrical connection. The transceiver interface 214 may be at least partially integrated with the transceiver 215.

The user interface 216 may comprise one or more of several devices such as, for example, a speaker, microphone, display device, vibration device, keyboard, touch screen, etc. The user interface 216 may include more than one of any of these devices. The user interface 216 may be configured to enable a user to interact with one or more applications hosted by the UE 200. For example, the user interface 216 may store indications of analog and/or digital signals in the memory 211 to be processed by DSP 231 and/or the general-purpose processor 230 in response to action from a user. Similarly, applications hosted on the UE 200 may store indications of analog and/or digital signals in the memory 211 to present an output signal to a user. The user interface 216 may include an audio input/output (I/O) device comprising, for example, a speaker, a microphone, digital-to-analog circuitry, analog-to-digital circuitry, an amplifier and/or gain control circuitry (including more than one of any of these devices). Other configurations of an audio I/O device may be used. Also or alternatively, the user interface 216 may comprise one or more touch sensors responsive to touching and/or pressure, e.g., on a keyboard and/or touch screen of the user interface 216.

The SPS receiver 217 (e.g., a Global Positioning System (GPS) receiver) may be capable of receiving and acquiring SPS signals 260 via an SPS antenna 262. The antenna 262 is configured to transduce the SPS signals 260 to wired signals, e.g., electrical or optical signals, and may be integrated with one or more of the antennas 246a-b. The SPS receiver 217 may be configured to process, in whole or in part, the acquired SPS signals 260 for estimating a location of the UE 200. For example, the SPS receiver 217 may be configured to determine location of the UE 200 by trilateration using the SPS signals 260. The general-purpose processor 230, the memory 211, the DSP 231 and/or one or more specialized processors (not shown) may be utilized to process acquired SPS signals, in whole or in part, and/or to calculate an estimated location of the UE 200, in conjunction with the SPS receiver 217. The memory 211 may store indications (e.g., measurements) of the SPS signals 260 and/or other signals (e.g., signals acquired from the wireless transceivers 240a-b) for use in performing positioning operations. The general-purpose processor 230, the DSP 231, and/or one or more specialized processors, and/or the memory 211 may provide or support a location engine for use in processing measurements to estimate a location of the UE 200.

The UE 200 may include the camera 218 for capturing still or moving imagery. The camera 218 may comprise, for example, an imaging sensor (e.g., a charge coupled device or a CMOS imager), a lens, analog-to-digital circuitry, frame buffers, etc. Additional processing, conditioning, encoding, and/or compression of signals representing captured images may be performed by the general-purpose processor 230 and/or the DSP 231. Also or alternatively, the video processor 233 may perform conditioning, encoding, compression, and/or manipulation of signals representing captured images. The video processor 233 may decode/decompress stored image data for presentation on a display device (not shown), e.g., of the user interface 216.

The position (motion) device (PMD) 219 may be configured to determine a position and possibly motion of the UE 200. For example, the PMD 219 may communicate with, and/or include some or all of, the SPS receiver 217. The PMD 219 may also or alternatively be configured to determine location of the UE 200 using terrestrial-based signals (e.g., at least some of the wireless signals 248a-b) for trilateration or mulilateration, for assistance with obtaining and using the SPS signals 260, or both. The PMD 219 may be configured to use one or more other techniques (e.g., relying on the UE's self-reported location (e.g., part of the UE's position beacon)) for determining the location of the UE 200, and may use a combination of techniques (e.g., SPS and terrestrial positioning signals) to determine the location of the UE 200. The PMD 219 may include one or more of the sensors 213 (e.g., gyroscope(s), accelerometer(s), magnetometer(s), etc.) that may sense orientation and/or motion of the UE 200 and provide indications thereof that the processor 210 (e.g., the general-purpose processor 230 and/or the DSP 231) may be configured to use to determine motion (e.g., a velocity vector and/or an acceleration vector) of the UE 200. The PMD 219 may be configured to provide indications of uncertainty and/or error in the determined position and/or motion. In an example the PMD 219 may be referred to as a Positioning Engine (PE), and may be performed by the general-purpose processor 230. For example, the PMD 219 may be a logical entity and may be integrated with the general-purpose processor 230 and the memory 211.

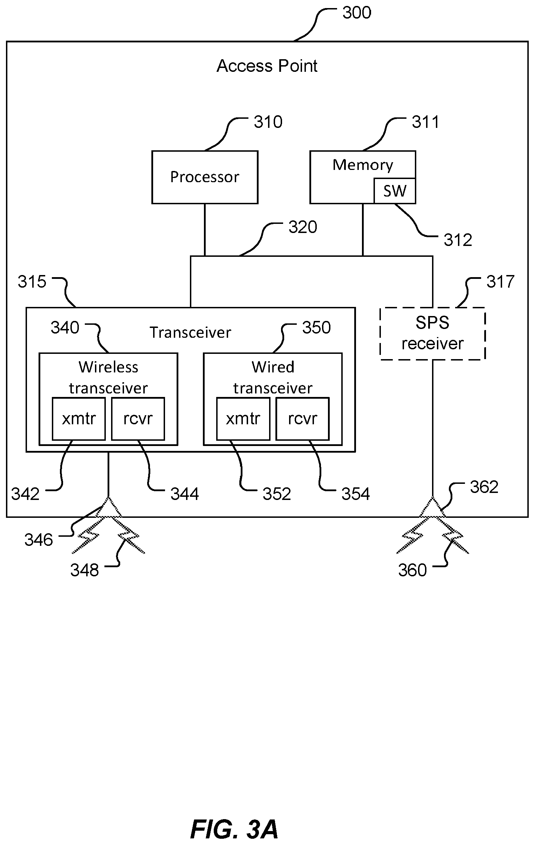

Referring also to FIG. 3A, an example of an access point (AP) 300 such as the AP 105 comprises a computing platform including a processor 310, memory 311 including software (SW) 312, a transceiver 315, and (optionally) an SPS receiver 317. The processor 310, the memory 311, the transceiver 315, and the SPS receiver 317 may be communicatively coupled to each other by a bus 320 (which may be configured, e.g., for optical and/or electrical communication). One or more of the shown apparatuses (e.g., a wireless interface and/or the SPS receiver 317) may be omitted from the AP 300. The SPS receiver 317 may be configured similarly to the SPS receiver 217 to be capable of receiving and acquiring SPS signals 360 via an SPS antenna 362. The processor 310 may include one or more intelligent hardware devices, e.g., a central processing unit (CPU), a microcontroller, an application specific integrated circuit (ASIC), etc. The processor 310 may comprise multiple processors (e.g., including a general-purpose/ application processor, a DSP, a modem processor, a video processor, and/or a sensor processor as shown in FIG. 2). The memory 311 is a non-transitory storage medium that may include random access memory (RAM)), flash memory, disc memory, and/or read-only memory (ROM), etc. The memory 311 stores the software 312 which may be processor-readable, processor-executable software code containing instructions that are configured to, when executed, cause the processor 310 to perform various functions described herein. Alternatively, the software 312 may not be directly executable by the processor 310 but may be configured to cause the processor 310, e.g., when compiled and executed, to perform the functions. The description may refer to the processor 310 performing a function, but this includes other implementations such as where the processor 310 executes software and/or firmware. The description may refer to the processor 310 performing a function as shorthand for one or more of the processors contained in the processor 310 performing the function. The processor 310 may include a memory with stored instructions in addition to and/or instead of the memory 311. Functionality of the processor 310 is discussed more fully below.

The transceiver 315 may include a wireless transceiver 340 and a wired transceiver 350 configured to communicate with other devices through wireless connections and wired connections, respectively. For example, the wireless transceiver 340 may include a transmitter 342 and receiver 344 coupled to one or more antennas 346 for transmitting (e.g., on one or more uplink channels) and/or receiving (e.g., on one or more downlink channels) wireless signals 348 and transducing signals from the wireless signals 348 to wired (e.g., electrical and/or optical) signals and from wired (e.g., electrical and/or optical) signals to the wireless signals 348. Thus, the transmitter 342 may include multiple transmitters that may be discrete components or combined/integrated components, and/or the receiver 344 may include multiple receivers that may be discrete components or combined/integrated components. The wireless transceiver 340 may be configured to communicate signals (e.g., with the UE 200, one or more other UEs, and/or one or more other devices) according to a variety of radio access technologies (RATs) such as IEEE 802.11 (including IEEE 802.11 ax and 802.11be), WiFi, WiFi Direct (WiFi-D), Bluetooth^{®}, IEEE 802.15 (UWB), Zigbee etc. The wired transceiver 350 may include a transmitter 352 and a receiver 354 configured for wired communication. The transmitter 352 may include multiple transmitters that may be discrete components or combined/integrated components, and/or the receiver 354 may include multiple receivers that may be discrete components or combined/integrated components. The wired transceiver 350 may be configured, e.g., for optical communication and/or electrical communication.

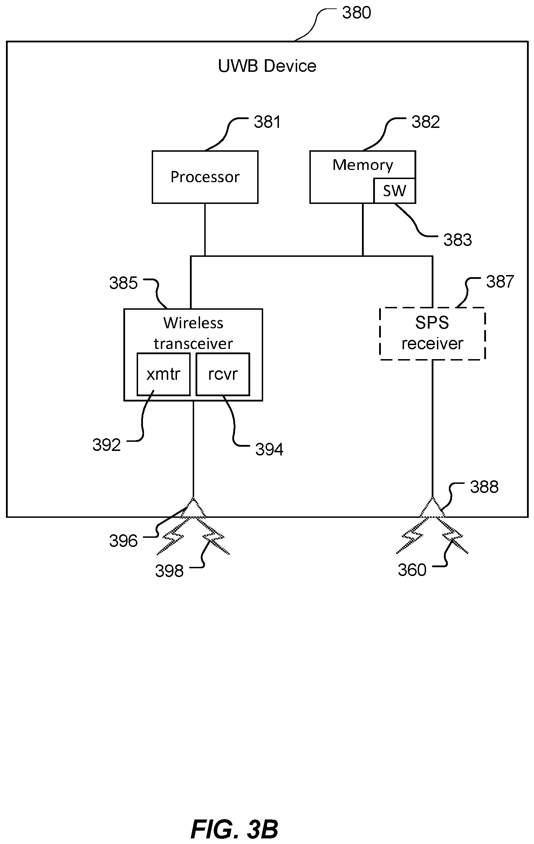

Referring also to FIG. 3B, an example of an UWB device 380 such as an asset tag, key fob, TV remote, security system (e.g., vehicle, commercial, etc.), or other device configured to send and receive UWB RF transmissions. The UWB device comprises a computing platform including a processor 381, memory 382 including software (SW) 383, a wireless transceiver 385, and (optionally) an SPS receiver 387. The SPS receiver 387 may be configured similarly to the SPS receiver 217 to be capable of receiving and acquiring SPS signals 360 via an SPS antenna 388. The processor 381 may include one or more intelligent hardware devices, e.g., a central processing unit (CPU), a microcontroller, an application specific integrated circuit (ASIC), etc. The processor 381 may comprise multiple processors (e.g., including a general-purpose/ application processor, a DSP, a modem processor, a video processor, and/or a sensor processor as shown in FIG. 2). The memory 382 is a non-transitory storage medium that may include random access memory (RAM)), flash memory, disc memory, and/or read-only memory (ROM), etc. The memory 382 stores the software 383 which may be processor-readable, processor-executable software code containing instructions that are configured to, when executed, cause the processor 381 to perform various functions described herein. Alternatively, the software 383 may not be directly executable by the processor 381 but may be configured to cause the processor 381, e.g., when compiled and executed, to perform the functions. The description may refer to the processor 381 performing a function, but this includes other implementations such as where the processor 381 executes software and/or firmware. The description may refer to the processor 381 performing a function as shorthand for one or more of the processors contained in the processor 381 performing the function. The processor 381 may include a memory with stored instructions in addition to and/or instead of the memory 382. Functionality of the processor 381 is discussed more fully below.

The wireless transceiver 385 is configured to communicate with other devices through wireless connections using UWB protocols. For example, the wireless transceiver 385 may include a transmitter 392 and receiver 394 coupled to one or more antennas 396 for transmitting (e.g., on one or more uplink channels) and/or receiving (e.g., on one or more downlink channels) UWB wireless signals 398 and transducing signals from the UWB wireless signals 398 to wired (e.g., electrical and/or optical) signals and from wired (e.g., electrical and/or optical) signals to the UWB wireless signals 398. In an example, the wireless transceiver 385 may include multiple transmitters that may be discrete components or combined/integrated components, and/or the receiver 394 may include multiple receivers that may be discrete components or combined/integrated components. In an example, the wireless transceiver 385 may be configured to communicate signals according to a variety of radio access technologies (RATs) in addition to UWB technologies. For example, the wireless transceiver 385 may be also configured to utilize RATs such as IEEE 802.11 (including IEEE 802.11ax and 802.11be), WiFi, WiFi Direct (WiFi-D), Bluetooth^{®}, IEEE 802.15 (UWB), Zigbee etc.

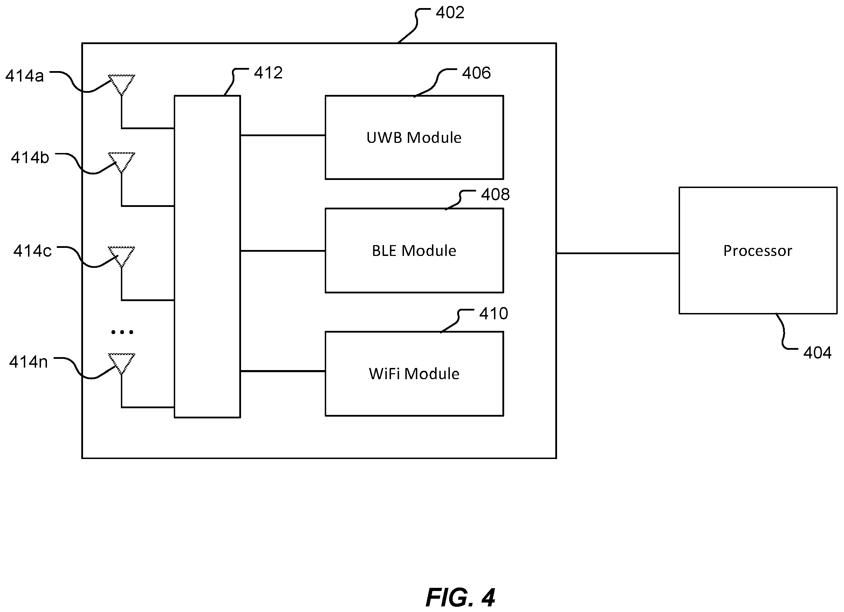

Referring to FIG. 4, a block diagram of an example communications module 402 with multiple transceivers is shown. The communications module 402 may be used as a transceiver in a mobile device, such as the transceiver 215 in the UE 200, a transceiver in an access point, such as the transceiver 315 in the AP 300, or other RF device, such as the transceiver 385 in the UWB device 380. In an example, in a V2X network, the communication module may be included in a Roadside Unit (RSU). The communications module 402 may be communicatively coupled to a processor 404, such as the general-purpose processor 230 and/or the modem processor 232. One or more RF modules such as a UWB module 406, a BLE module 408, and a WiFi module 410 may be communicatively coupled to a plurality of antennas 414a-n via one or more multiplexers 412. The multiplexers 412 may include switches, phase shifters, and tuning circuits configured to enable one or more of the RF modules 406, 408, 410 to send and receive signals via one or more of the antennas 414a-n. For example, the WiFi module 410 and the UWB module 406 may be configured to utilize one or more of the antennas 414a-n based on operational frequencies. The phase shifters, and other components within the multiplexers 412 (e.g., a Butler matrix), may enable beamforming to increase transmit or receive gain on different boresight angles from the location of the antennas 414a-n.

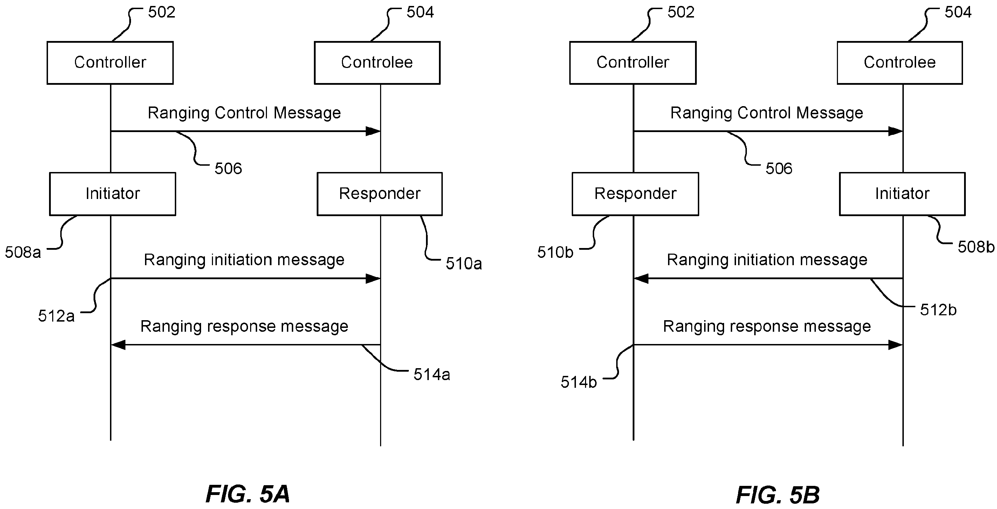

Referring to FIGS. 5A and 5B, example message flow diagrams used for Enhanced Ranging Devices (ERDEVs) are shown. Two devices such as the UE 200 and a UWB device 380 may be configured to exchange messages to determine a range (e.g., distance) between one another. In an example automotive use case, a UE 200 may be a smart phone and configured to perform the role of a controller 502 and a UWB device 380 may be in a vehicle and configured to perform the role of a controlee 504. In an example, the UE 200 may be configured to unlock and start the vehicle when within a specified range of the vehicle and the message flow diagrams in FIGS. 5A and 5B may be used to determine the range between the vehicle and the UE. As the controller 502, the UE 200 may establish the parameters for a UWB ranging session and provide the session information to the controlee 504 via one or more Ranging Control Messages (RCMs) 506. The RCM 506 may include ranging parameters, such as channel information, ranging block and slot configurations, to enable the stations to perform a time-scheduled or contention-free UWB ranging session. The controlee 504 may be configured to utilize the ranging parameters received from the controller 502 in the RCM 506. In an example, the controller 502 and the controlee 504 may exchange RCMs 506 to negotiate the session parameters. The concepts of the controller 502 and the controlee 504 are based on an upper layer networking perspective, and roles of an initiator and responder may be used on the physical and medium access control (MAC) layers. Utilizing the ranging parameters included in the RCM 506, an initiator 508a, 508b is configured to initiate a ranging exchange by sending the first message of the exchange, such as a ranging initiation message (RIM) 512a, 512b. As depicted in FIGS. 5A and 5B, either the controller 502 or the controlee 504 may assume the respective roles as the initiator 508a, 508b. Similarly, the controller 502 and the controlee 504 may be configured as the respective responder 510a, 510b and may respond to the respective RIMs 512a, 512b with ranging response messages (RRMs) 514a, 514b. In general, UWB ranging is designed to have a relatively low complexity data structure to enable ranging between relatively low cost devices (e.g., low complexity devices). The ranging sessions may be time division multiple access (TDMA) based with ranging blocks being the primary unit.

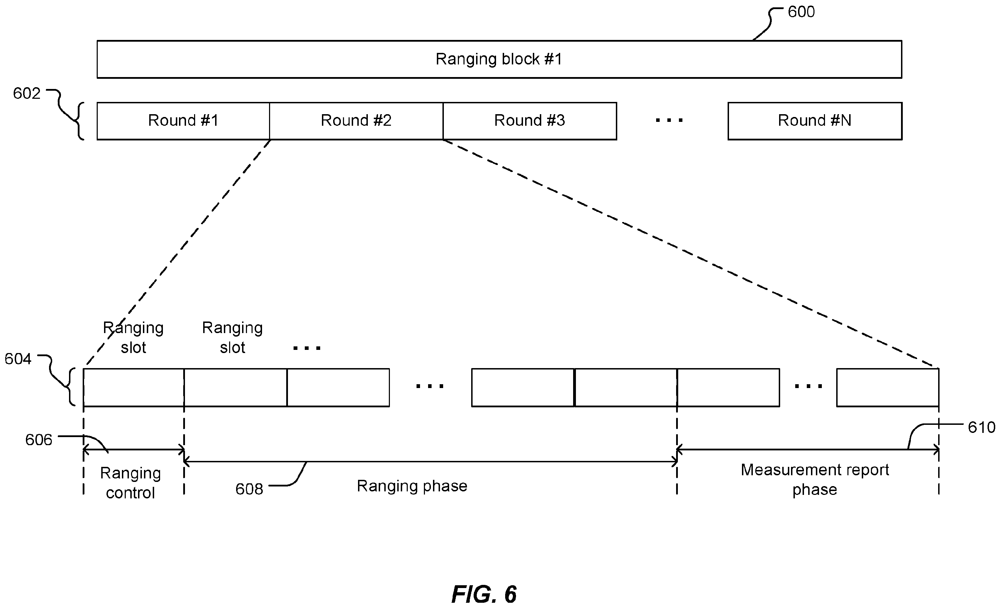

Referring to FIG. 6, with further reference to FIGS. 5A and 5B, a diagram of an example ranging block 600 for use in a UWB ranging session is shown. A UWB ranging session between two devices (e.g., a UE 200 and a UWB device 380) may include consecutive ranging blocks 600. Each ranging block 600 includes ranging rounds 602, which are comprised of ranging slots 604. Within a ranging block 600, a responder 510a, 510b may transmit a message within a single ranging round 602 (e.g., round #2). The round index may be statically configured by the controller 502 or selected based on a hopping pattern configured by the controller 502. The slots 604 within a selected ranging round 602 may be used sequentially to perform ranging exchanges and/or to determine TDOA measurements. Each ranging round 602 (e.g., round #2) may include a single ranging control slot 606 followed by ranging phase slots 608 and measurement reporting slots 610. The ranging rounds 602 and ranging slots 604 may be of a fixed duration as established in the RCM 506. In an example, different ranging rounds 602 in sequential ranging blocks 600 may be used to reduce interference caused by UWB ranging sessions between other proximate stations. In an example, a ranging block 600 may be approximately 250 milliseconds (ms) in duration and a ranging round 602 may be approximately 10 ms in duration. A default ranging slot 604 duration is approximately 1ms. Other block, round, and slot durations may also be used. The duration of the ranging slots 604 may vary based on the configuration of the ranging packets. In an example, a ranging packet without a physical layer payload (e.g., STS packet configuration three) may be approximately 150 microsecond (µs) in duration. In general, there is one ranging packet per ranging slot 604, and multiple ranging packets may be exchanged between the initiator and responder in respective ranging phase slots 608.

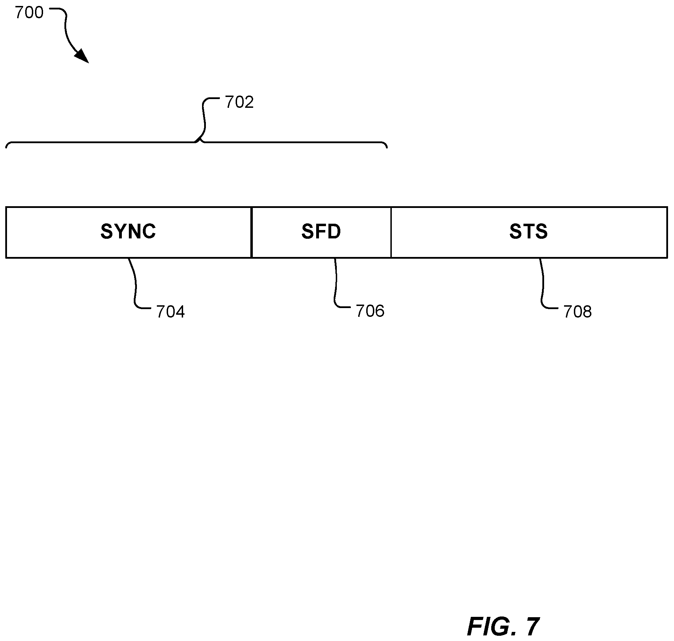

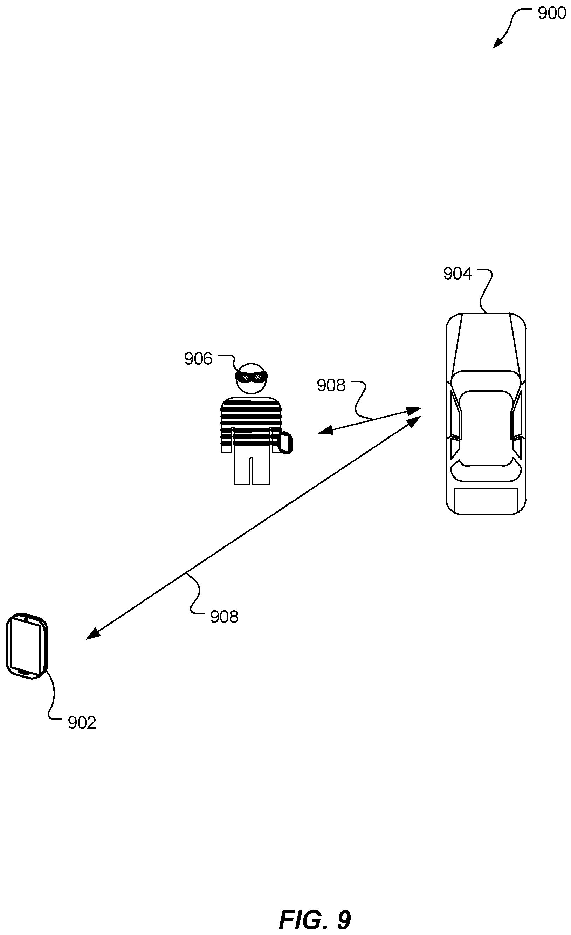

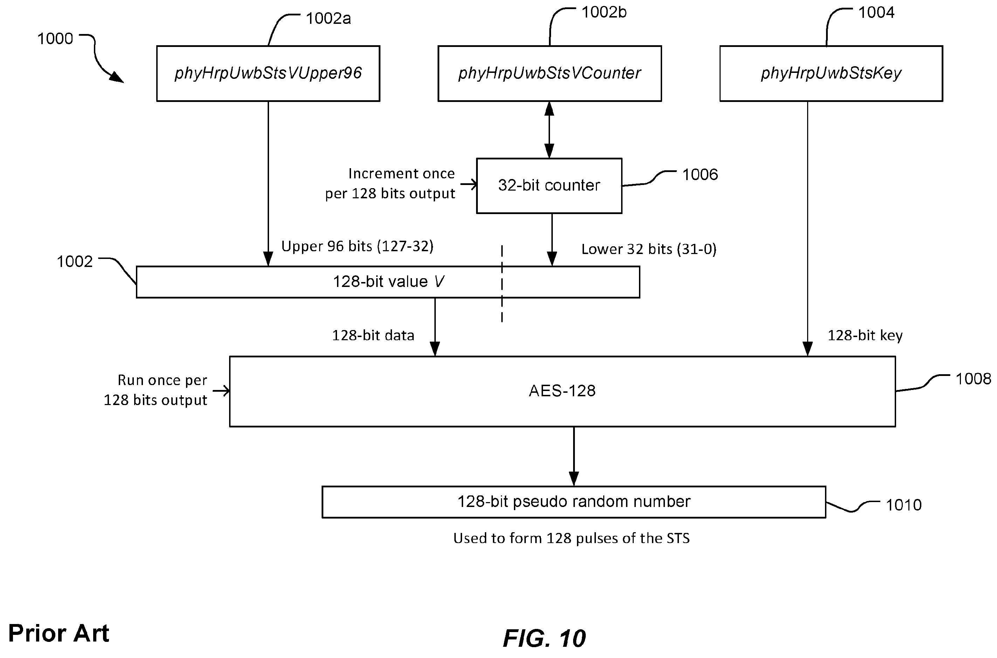

Referring to FIG. 7, an example physical protocol data unit (PPDU) frame 700 incorporating a sync preamble for ranging is shown. A UWB ranging session may utilize packet formats based on the PPDU frame 700. The PPDU frame 700 is an example, and not a limitation, as other data structures may include a sync preamble for ranging. In an effort to reduce the chances of an external attack, such as depicted in FIG. 9, secure ranging protocols may encrypt the physical layer (PHY) timestamp sequence using the AES-128 encryption algorithm. The PPDU frame 700 may include a synchronization header (SHR) 702, which includes a synchronization (SYNC) field 704 and a start of frame delimiter (SFD) 706. The SYNC field 704 (also referred to as a preamble sequence) includes a predetermined sequence (such as an Ipatov ternary sequence) configured to improve autocorrelation properties. The SYNC field 704 (i.e., the preamble sequence) may be susceptible to over-the-air attacks because an attacker may anticipate that a known sequence is being utilized. A ciphered sequence, such as a scrambled timestamp sequence (STS) 708 may be used to increase the integrity and accuracy of ranging measurements. The STS 708 may include sequences of pseudo-randomized pulses generated using a Deterministic Random Bit Generator (DRBG) based on the Advanced Encryption Standard (AES), such as depicted in FIG. 10. The SFD 706 is configured to help demarcate the SYNC field 704 from the STS 708. The STS 708 may be encrypted using the AES-128 algorithm and a ToA estimate may be based on decoding the STS 708. In an example, a range measurement may be validated if the received STS 708 may be cross correlated with a locally generated reference. A receiving station may be configured to locally generate a secure sequence based on the same key information used by a transmitting station to generate the STS 708. For example, the STS key and V values utilized in the AES algorithm may be provided to a receiving station via an out-of-band transmission, and both the transmitting and receiving stations may be configured to generate the STS 708. The PPDU frame 700 is an example of a STS packet configuration three and does not include a data payload. In an example, other STS packet configurations (e.g., zero, one, and two) may also be used for UWB ranging sessions.

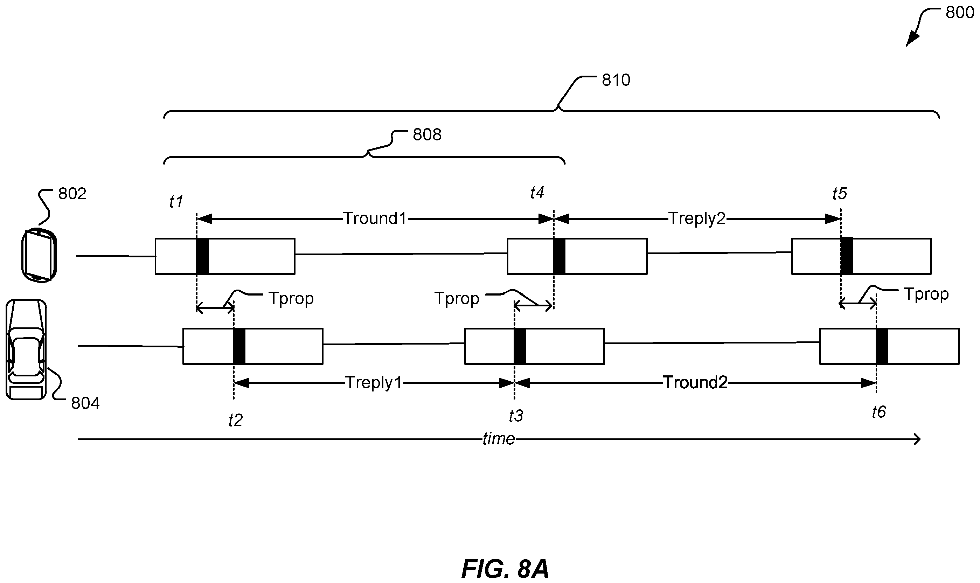

Referring to FIG. 8A, a diagram 800 of example signal exchanges for UWB ranging is shown. The diagram 800 includes a first UWB device 802 (e.g., a smartphone) and a second UWB device 804 (e.g., a vehicle). The UWB devices 802, 804 may include some or all of the components of the UE 200 and/or the UWB device 380. The UE 200 is an example of the first UWB device, and the UWB device 380 is an example of the second UWB device 804. Each of the UWB devices 802, 804 includes one or more transceivers configured to send and receive UWB signals, such as depicted in the communications module 402. The signal exchanges may be based in the IEEE 802.15.4 standard and may utilize the physical layer (PHY) and media access control (MAC) sublayers as described in FIGS. 5A-7 to enable secure ranging. The positioning exchanges may also utilize IEEE 802.15.4z security features such as STS 708 in the UWB ranging frame to prevent preamble insertion attacks. In a first example, the UWB signals comprise a single-sided two-way ranging exchange 808 such that the first UWB device 802 transmits a ranging marker at time t1 which is received by the second UWB device 804 at time t2. The second UWB device 804 may send an acknowledgement frame at time t3, which is received by the first UWB device at time t4. A first round time (Tround1) is equal to t4-t1, and a first reply time (Treply1) is equal to t3-t1. The second UWB device 804 may be configured to provide the Treply1 time to the first UWB device 802. The first UWB device 802 may compute a first round trip propagation time: $Tprop 1 = Tround 1 - Treply 1$ (1)

The distance between the first UWB device 802 and the second UWB device 804 is equal to: $distance = c * \left(Tprop1/2\right)$ (2) where c = the speed of light.

In a second example, the signals comprise a double-sided two-way ranging exchange 810 such that the first UWB device 802 will also transmit an acknowledgment at time t5 which is received by the second UWB device 804 at time t6. The first UWB device 802 may provide a second reply time (Treply2) (i.e., t5-t4) to the second UWB device 804. The Tprop time may be computed as: $\begin{matrix}Tprop = \left(\left(Tround1*Tround2\right)-\left(Treply1*Treply2\right)\right) / \\ \left(Tround1+Tround2-Treply1-Treply2\right)\end{matrix}$ (3)

The propagation times (i.e., Tprop) represent the time-of-flight (ToF) of the respective signals between the UWB devices 802, 804 and may be used to determine the distance between the UWB devices 802, 804. In operation, a UWB device may be configured to determine distances up to 100m with an accuracy of approximately +/- 10 cm.

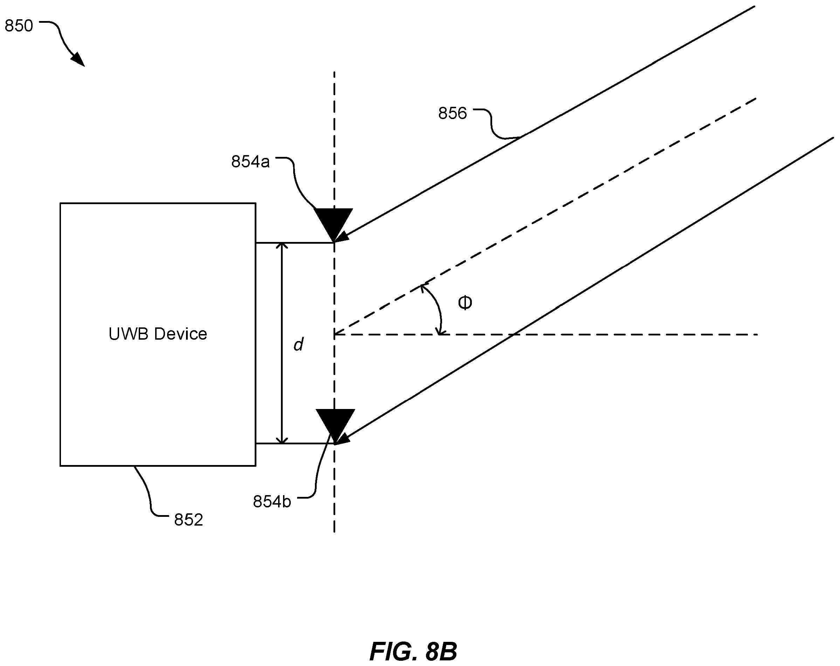

Referring to FIG. 8B, a diagram 850 of an example angle of arrival of a UWB signal is shown. The diagram 850 includes a UWB device 852 (e.g., the first UWB device 802 or the second UWB device 804) with a plurality of antennas 854a, 854b in an antenna array. A UWB signal 856 is detected at an angle of arrival (AoA) Φ by the antenna array. In general, the AoA is based on a time difference between the arrival of the UWB signal 856 at each of the antennas 854a, 854b in the antenna array. The time delay between the arrival of the signals may be determined as: $t = d * sin Φ / c$ (4) where,
t is the time delay;
d is the distance between the antennas;
Φ is the AoA; and
c is the speed of light.

In operation, the UWB device may be configured to determine an AoA with an accuracy of approximately of +/- 1.5 degrees.

Referring to FIG. 9, a diagram 900 of an example replay attack to falsify a time-of-arrival estimate is shown. The diagram 900 includes a UE 902 and a vehicle 904 configured to exchange UWB ranging messages via a UWB link 908 as described herein. In prior security procedures, a responding station may be configured to receive a PPDU frame 700 from the initiator, and then transmit a time-reversed and conjugated version of the received signal back to the initiator. An attacker 906 may be positioned to intercept the UWB ranging messages on the UWB link 908 and perform a replay attack by transmitting a time-reversed and conjugated version of the signal transmitted by the initiator. As a result of the attacker's transmission, the initiating station may determine an earlier ToA for the attacker 906 and/or determine there is interference on the UWB link 908. For example, the vehicle 904 may be the initiator in a UWB ranging exchange with the UE 902 to determine a range to the UE 902. The vehicle 904 may be configured to enable security features such as unlocking the doors, starting the engine, opening a trunk, etc. based in part on the distance to the UE 902. The vehicle 904 may transmit a data packet such as the PPDU frame 700 to the UE 902, and the UE 902 may be configured to send a time-reversed and conjugated version of the received signal back to the vehicle 904. The time-reversal and conjugation of the signal may provide a time focusing effect for the signal received by the vehicle 904 and thus improve the detection of a ToA peak. The procedure, however, is susceptible to a replay attack because the attacker 906 receives the PPDU frame 700 (including the SYNC and STS sequences) and can generate a time-reversed and conjugated version of the received signal. The attacker 906 may then transmit the time-reversed and conjugated version of the received signal back to the vehicle 904. The vehicle 904 may determine a ToA based on the spoofed signal and incorrectly determine that the UE 902 is at the location of the attacker 906. Alternatively, the spoofed signal transmitted by the attacker 906 may cause vehicle 904 to determine there is interference on the channel and react accordingly (e.g., change channels, initiate another ranging session, deny access to the vehicle, etc.).

Referring to FIG. 10, a block diagram of a process 1000 for generating a pseudo random number based on the AES standard is shown. The resulting pseudo random number may be used as a STS for ranging as described in the IEEE 802.15.4z standard. The process 1000 utilizes a block size of 128 bits, but other sizes may also be used (e.g., 192, 256 bits). An STS consists of a sequence of pseudo randomized pulses generated by a Deterministic Random Bit Generator (DRBG) based on AES-128 in counter mode, such as the process 1000. Each time the DRBG is run, it produces a 128-bit pseudo random number used for the STS. The process 1000 provides a 128-bit value V 1002 and a 128-bit key 1004 to the AES-128 algorithm 1008. The value V 1002 may include an upper 96 bits 1002a and a 32 bit counter 1002b which may be incremented once per 128-bits of output at stage 1006. The output of the AES-128 algorithm 1008 is a 128-bit pseudo random number 1010 which is used to form the STS. In operation, a transmitting station and a receiving station may receive V and key values (including the counter configuration) via a secure means and each station may generate the same 128-bit pseudo random number 1010 based on those inputs. The receiving station may correlate the locally generated STS with the STS received from the transmitting station.

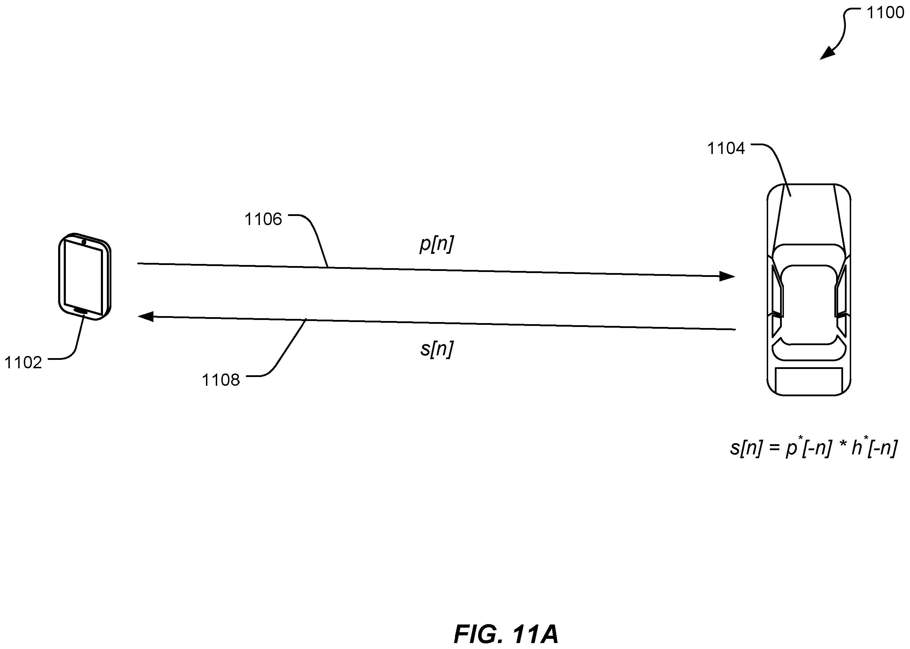

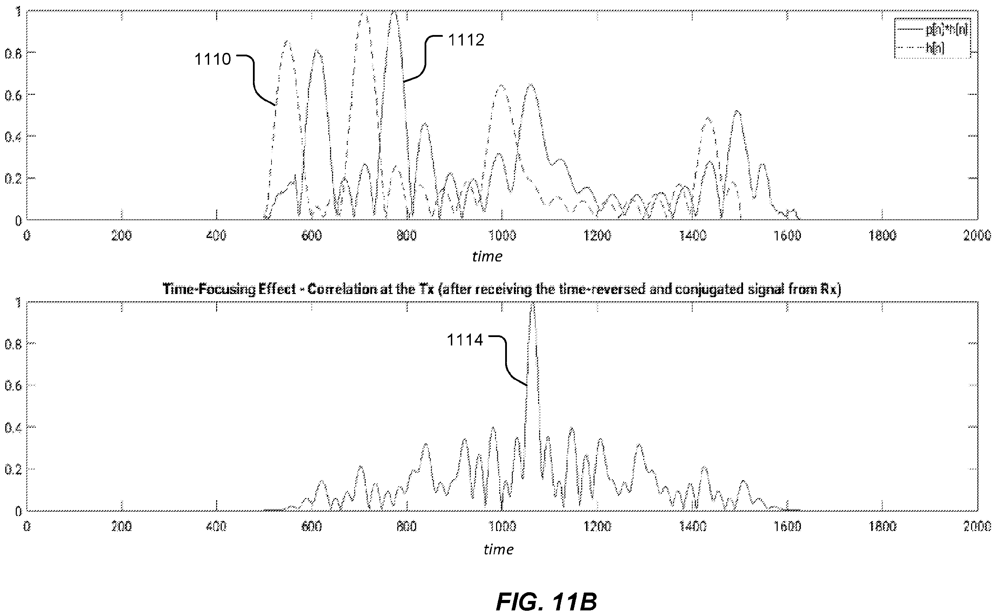

Referring to FIGS. 11A and 11B, example signal exchanges 1100 and a corresponding time-focusing effect based on correlating a time-reversed and conjugated version of a signal is shown. Two UWB capable devices, such as a UE 1102 and a vehicle 1104, may be configured to perform a ranging session with one another. In an example, the UE 1102 may be the controller 502 and the initiator 508a, and the vehicle 1104 may be the controlee 504 and responder 510a. The UE 1102 may transmit a first ranging frame 1106 (e.g., a PPDU frame 700) including a sequence p[n]. The sequence p[n] may be based on the STS as described in FIG. 7. The vehicle 1104 may be configured to determine a ToA estimate based on correlation techniques as known in the art. The vehicle 1104 may also generate and transmit a second ranging frame 1108 including a sequence s[n], which is a time-reversed and conjugated version of the received p[n]. The received p[n] is implicitly based on the channel state h[n]. For example, referring to FIG. 11B, a first response plot 1110 is based on the channel state h[n] and a second response plot 1112 is the received p[n], which is based on p[n] and h[n]. The UE 1102 may be configured to correlate the received s[n] with the time-reversed version of the local STS (i.e., p*[-n]) to obtain a ToA estimate for the second ranging frame 1108. The correlation of received s[n] with the time-reversed version of the local STS results in a time-focusing effect as depicted in a third response plot 1114. The time-focusing effect provides a distinguishable peak in the time domain, which is used for the ToA estimate. As described in FIG. 9, an issue with this approach is that an adversary (e.g., the attacker 906) in the vicinity may receive p[n] and then compute and transmit the time-reversed and conjugated version s[n]. As a result, the UE 1102 may incorrectly determine that there is interference on the channel, and/or that the vehicle 1104 is closer to the UE 1102 than it actually is. The technical advantages of the UWB interference detection and secure ranging techniques described herein overcome the security issues in the prior art by maintaining secure sequence information between the controller and the controlee which will reduce or eliminate the impact of a replay attack.

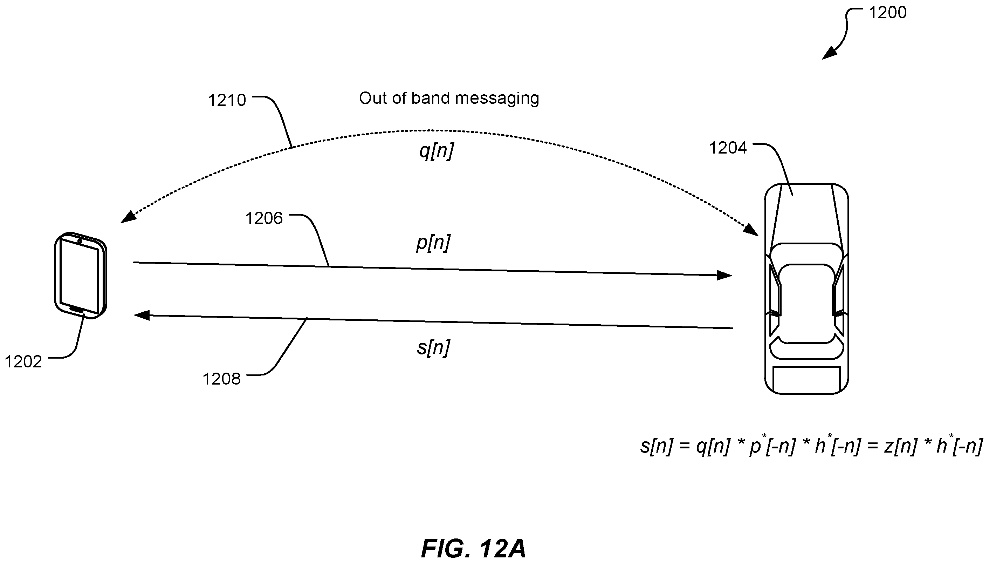

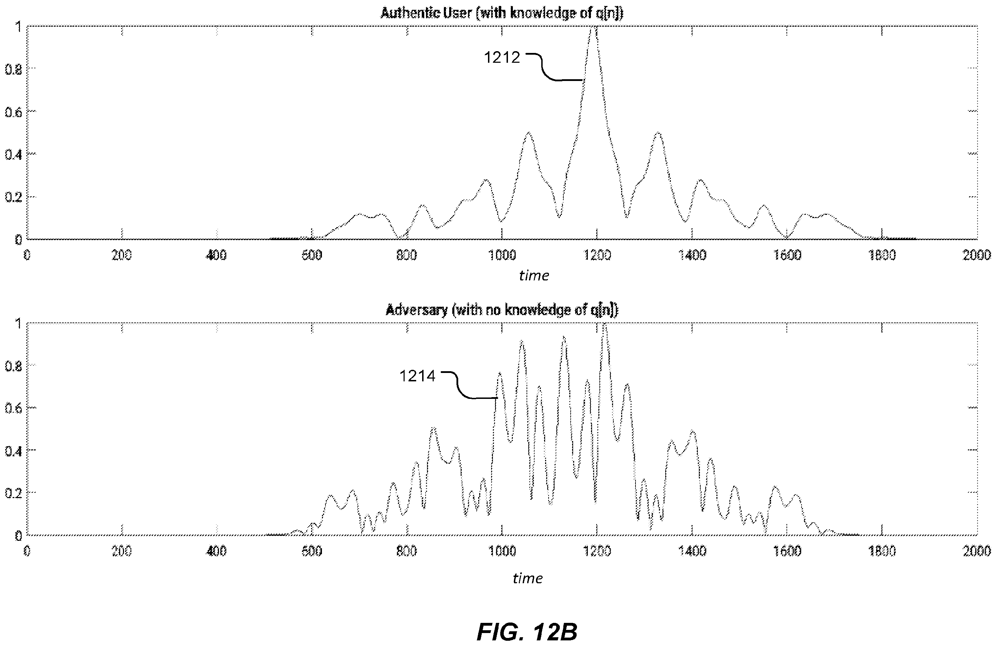

Referring to FIGS. 12A and 12B, example signal exchanges 1200 utilizing interference detection and secure ranging singles, and example signal plots are shown. Two UWB compatible devices, such as a UE 1202 and a vehicle 1204 are configured to perform the signal exchanges 1200. As compared to the signal exchanges 1100 discussed in FIG. 11A, the signal exchanges 1200 include a secure sequence q[n] which is provided via out-of-band messaging 1210 (e.g., separate from the ranging signal exchange) to the UE 1202 and the vehicle 1204. In an example, the out-of-band communication may utilize a different radio access technology (e.g., WiFi, Bluetooth, D2D, sidelink, etc.) to ensure the secure sequence q[n] is known only by the controller and the controlee. The secure sequence q[n] may be included in RCMs 506 exchanged between the UE 1202 and the vehicle 1204. The UE 1202, in the role of the initiator 508a, is configured to transmit a first ranging frame 1206 including the sequence p[n] (e.g., based on the STS) as described in FIG. 11A. The vehicle 1204 is configured to receive the first ranging frame 1206 and generate and transmit a second ranging frame 1208 including a sequence s[n]. As compared to the signal exchange 1100, where the sequence s[n] was simply a time-reversed and conjugated version of the received sequence p[n], the sequence s[n] in the second ranging frame 1208 is further based on a convolution of the received sequence p[n] with the secure sequence q[n], such that: $s \left[n\right] = q \left[n\right] ∗ {y}_{2}^{∗} \left[-n\right]$ (5) $s \left[n\right] = q \left[n\right] ∗ {p}^{∗} \left[-n\right] ∗ {h}^{∗} \left[-n\right] = z \left[n\right] ∗ {h}^{∗} \left[-n\right]$ (6) where,
*h[n]* is the channel; and
*z[n]* is *q*[*n*] * *p**[*-n*]*.*

The vehicle 1204 transmits back the sequence s[n] in the second ranging frame 1208, and the UE 1202 is configured to correlate the received s[n] (i.e., s[n] * h[n]) with a local copy of z[n], which is based on the secure sequence q[n] and the sequence p[n]. A ToA estimate is obtained using W[n], such that: $W \left[n\right] = \left(h\left[n\right]∗{h}^{∗}\left[-n\right]\right) ∗ \left(\sum z \left[m\right] z \left[m-n\right]\right)$ (7) where,
(*h*[*n*] * *h**[*-n*]) is the equivalent channel (i.e., *h_{eq}[n]*); and
∑ *z*[*m*]*z*[*m* - *n*] is the autocorrelation of *z[n]* (i.e., *R_{zz}[n]*)*.*

The function W[n] enables a time-focusing effect such that the equivalent channel (*h_{eq}[n]*) is part of the received signal at the UE 1202 (e.g., the initiator 508a). For example, referring to FIG. 12B, a first response plot 1212 illustrates a channel response with the time-focusing effect including a single peak and a relatively higher peak-to-side lobe ratio. The UE 1202 may be configured to perform an integrity check or interference detection using, for example, peak and sidelobe information associated with W[n]. This scheme provides the technical advantage of improving the robustness of the signal exchange 1200 against replay attacks since the adversary does not know what q[n] is given by.

In operation, in the presence of a replay attack, the convolution with the time-reversed version provided by the adversary may be expressed as W' [n], such that: $W ′ \left[n\right] = \left({h}_{eq}\left[n\right]∗{R}_{{p}^{∗} {p}^{∗}}\left[n\right]\right) ∗ q \left[n\right]$ (8) where,
*R_{p*p*}*[*n*] is the autocorrelation of *p**[*-n*].

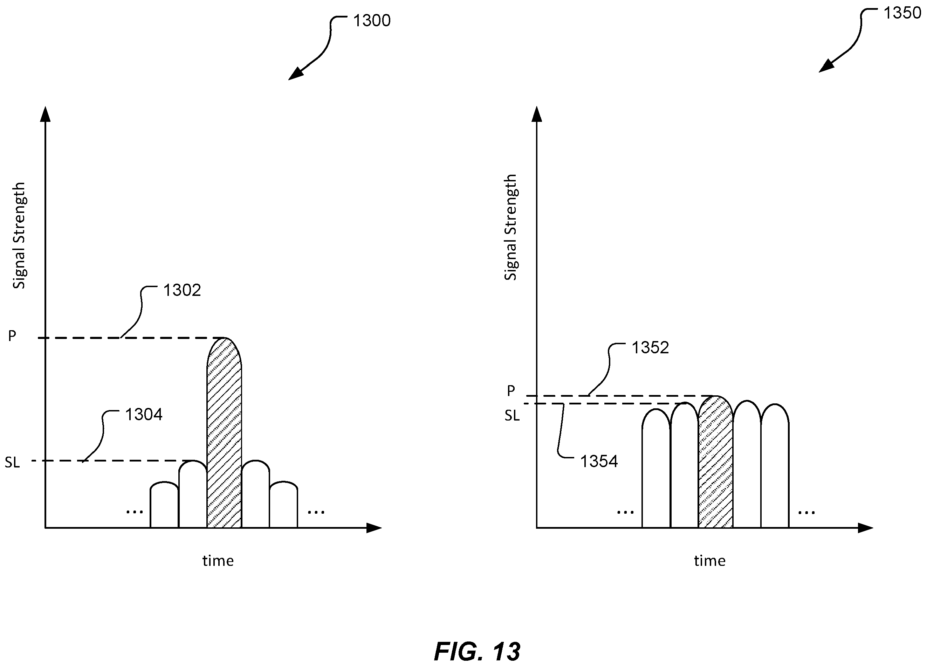

The function W' [n] in equation (8) will not produce the time-focusing effect of equation (7) and thus the resulting signal will appear as noise rather than the channel impulse response. For example, referring to FIG. 12B, a second response plot 1214 illustrates W' [n] when the adversary does not know the secure sequence q[n] and thus the s[n] transmitted by the adversary could not be based on q[n]. As compared to the first response plot 1212, the second response plot 1214 includes multiple peaks spread across time and a relatively lower peak-to-side lobe ratio. The presence of multiple peaks and/or the lower peak-to-sidelobe may be used to detect the replay attack, or channel interference. In an example, referring to FIG. 13, example illustrations of sidelobes associated with different correlated sequences are shown. A first illustration 1300 depicts a relatively strong peak signal 1302 and a relatively low sidelobe signal 1304. The first illustration 1300 is associated with the time-focusing effect and will result in an accurate ToA measurement value. In comparison, a second illustration 1350 is associated with a sequence with low correlation properties (e.g., without the time-focusing effect). In this example, the difference between the peak signal 1352 and the sidelobe signal 1354 is small. The UE 1202 may be configured to detect the presence of the sidelobes and determine whether the peak-to-sidelobe ratio is below a threshold (e.g., 1:4, 1:3: 1:2, etc.) to detect a replay attack or channel interference. Other integrity checks based on the function W'[n] may be used.

In an example, an additional affirmative integrity check/interference detection procedure may utilize another controller sequence r[n] such that the pointwise dot product (or other generalized operation) of W'[n] and r[n] goes to zero. This will occur when q[n] and r[n] are orthogonal to one another. This implies: $W " \left[n\right] = W ′ \left[n\right] ∘ r \left[n\right] = \left({h}_{eq}\left[n\right]∗{R}_{{p}^{∗} {p}^{∗}}\left[n\right]\right) ∗ \left(q\left[n\right]∘r\left[n\right]\right) = 0$ (9) Thus, for an authentic signal: $W " \left[n\right] = W ′ \left[n\right] ∘ r \left[n\right] = \left({h}_{eq}\left[n\right]\right) ∗ \left({R}_{zz}\left[n\right]∘r\left[n\right]\right) \neq 0$ (10)

The secure sequence q[n] and the controller sequence r[n] may be generated and/or provided by the controller. In the cases where the transmitting station (e.g., the UE 1202) is both the controller and the initiator, only the secure sequence q[n] is provided to the responder via the out-of-band messaging 1210 (i.e., the r[n] is not provided to the responder). Other operations may be used to determine a controller sequence r[n] that is orthogonal to a secure sequence q[n].

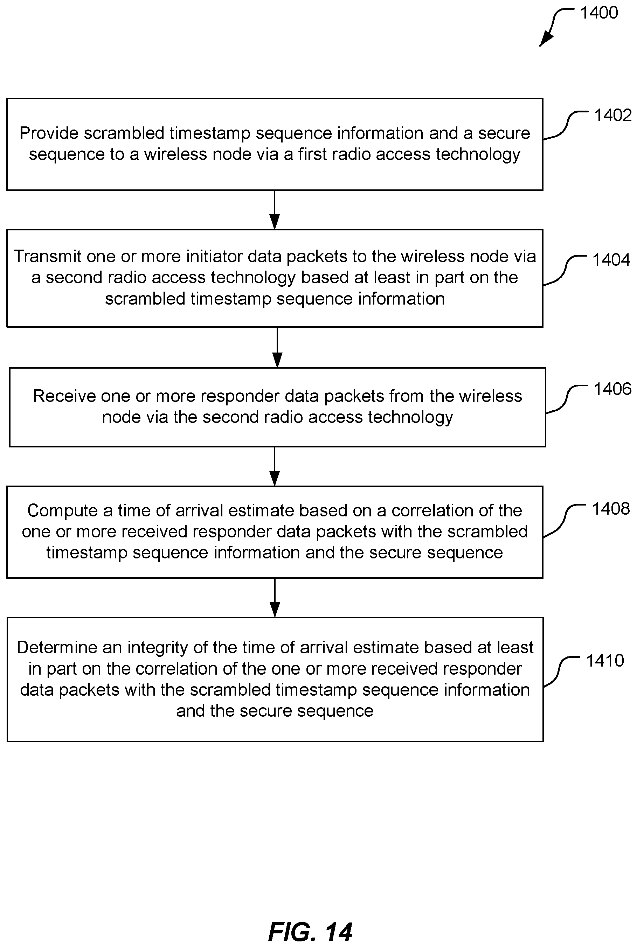

Referring to FIG. 14, with further reference to FIGS. 1-13, a method 1400 for determining the integrity of a UWB ranging signal includes the stages shown. The method 1400 is, however, an example and not limiting. The method 1400 may be altered, e.g., by having stages added, removed, rearranged, combined, performed concurrently, and/or having single stages split into multiple stages. For example, computing a ToA at stage 1408 and determining the integrity of the ToA at stage 1410 may be performed in a single stage. The method 1400 may be performed by a controller 502 in a UWB ranging session. The controller 502 may be a UE 200, an access point 300, a UWB device 380, or other wireless node configured to utilize UWB ranging procedures.

At stage 1402, the method includes providing scrambled timestamp sequence information and a secure sequence to a wireless node via a first radio access technology. A UE 200, including processor 210 and a transceiver 215, is a means for providing the STS and secure sequence to a wireless node. In an example, referring to FIG. 12A, the UE 1202 is configured to communicate with a responding station, such as the vehicle 1204, via out-of-band messaging 1210. The out-of-band messaging may utilize security features such as WiFi security protocols (WEP, WPA, WPA2), Bluetooth security modes, or other security protocols, to enable secure communications between the UE 1202 and the vehicle 1204. In an example, the out-of-band messaging 1210 may utilize cellular topologies such as LTE, 5G NR, and other D2D and sidelink technologies. The STS information may include parameters for enabling/decoding AES encryption such as STS key and counter information, as described in FIG. 10. The secure sequence q[n] may be included in the out-of-band messaging. In an example, the length of the secure sequence q[n] may be the same as the length of the STS. Other sequence lengths may also be used.

At stage 1404, the method includes transmitting one or more initiator data packets to the wireless node via a second radio access technology based at least in part on the scrambled timestamp sequence information. The UE 200, including the processors 210 and the transceiver 215, is a means for transmitting the one or more initiator data packets. In an example, the second radio access technology may be based on UWB configurations, and the one or more initiator data packets may be included in the first ranging frame 1206 transmitted by the UE 1202. The one or more initiator data packets may be based on a UWB PHY format for ranging, such as the PPDU frame 700 including the STS 708 and the STS information may be based on the STS key and counter information provided to the wireless node at stage 1402. In an example vehicle use case, such as depicted in FIG. 12A, the UE 1202 may provide STS information and the secure sequence q[n] via a WiFi exchange with the vehicle 1204, and then utilize UWB to transmit the one or more initiator data packets to the vehicle 1204 including the sequence p[n], which is based on the STS. Other use cases may utilize different combinations of radio access technologies.

At stage 1406, the method includes receiving one or more responder packets from the wireless node via the second radio access technology. The UE 200, including the processors 210 and the transceiver 215, is a means for receiving the one or more responder packets. A responding station is configured to generate a response based on the secure sequence information received at stage 1402, and the one or more initiator data packets received at stage 1404. For example, referring to FIG. 12A, the vehicle 1204 as the responding station is configured to transmit responder packets including the sequence s[n], which is based on a time-reversed and conjugated version of the received sequence p[n] and the secure sequence q[n] as described in equation (6). The responder packets may utilize a UWB PHY format for ranging, such as PPDU frames. The UE 1202 is configured to receive the one or more responder packets including the sequence s[n] transmitted by the vehicle 1204.

At stage 1408, the method includes computing a time of arrival estimate based on the correlation of the one or more received responder data packets with the scrambled timestamp sequence information and the secure sequence. The UE 200, including the processors 210, is a means for computing the time of arrival estimate. The initiating station is configured to utilize the STS information (e.g., p[n]) and the secure sequence (e.g., q[n]) to generate a local sequence z[n] as described in equation (6). The ToA estimate is obtained based in part on z[n] as indicated in equation (7). The function W[n] in equation (7) enables a time-focusing effect to determine the ToA value. For example, referring to FIG. 12B, a first response plot 1212 illustrates a channel response with the time-focusing effect including a single peak and a relatively higher peak-to-side lobe ratio. The time value of 1200 associated with single peak in the first plot 1212 is a ToA estimate.

At stage 1410, the method includes determining an integrity of the time of arrival estimate based at least in part on the correlation of the one or more received responder data packets with the scrambled timestamp sequence information and the secure sequence. The UE 200, including the processors 210, is a means for determining the integrity of the ToA estimate. The initiator in the UWB ranging exchange may utilize the W[n] sequence to determine a peak signal, such as depicted in the first response plot 1212. The presence of a single peak implies that the ToA estimate is based on a signal transmitted from the responder rather than an adversarial station, or otherwise diminished due to interference. In an example, the peak may be evaluated against a threshold value to determine the integrity of the ToA estimate. For example, the presence of a single peak above a threshold value (e.g., 0.6, 0.7, 0.8, etc.) may be used to determine the ToA estimate is legitimate. Other techniques, such as threshold values based on peak-to-sidelobe ratios, may also be used to determine the integrity of the ToA estimate. In an example, another controller sequence r[n] which is orthogonal to q[n] may be used to determine the integrity of the ToA estimate as described in equations (9) and (10). In an example, a threshold may be imposed on a statistical value, such as the mean or variance, associated with the correlation of the one or more received responder data packets with the scrambled timestamp sequence information and the secure sequence in the time domain, such as described in equations (8).

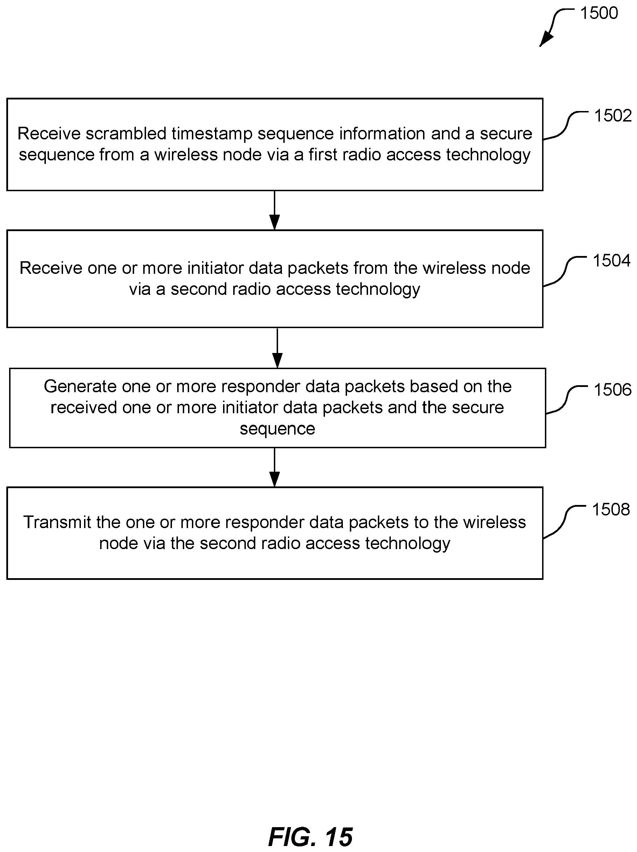

Referring to FIG. 15, with further reference to FIGS. 1-13, a method 1500 for transmitting a secure UWB ranging signal includes the stages shown. The method 1500 is, however, an example and not limiting. The method 1500 may be altered, e.g., by having stages added, removed, rearranged, combined, performed concurrently, and/or having single stages split into multiple stages. The method 1500 may be performed by a responder 510a, 510b in a UWB ranging session. The responder 510a, 510b may be a UE 200, an access point 300, a UWB device 380, or other wireless node configured to utilize UWB ranging procedures.

At stage 1502, the method includes receiving scrambled timestamp sequence information and a secure sequence from a wireless node via a first radio access technology. A UE 200, including processor 210 and a transceiver 215, is a means for receiving a STS and secure sequence from a wireless node. In an example, referring to FIG. 12A, the vehicle 1204 is configured to communicate with an initiating station, such as the UE 1202, via out-of-band messaging 1210. The out-of-band messaging may utilize security features such as WiFi security protocols (WEP, WPA, WPA2), Bluetooth security modes, or other security protocols, to enable secure communications between the initiator and responder stations. In an example, the out-of-band messaging 1210 may utilize cellular topologies such as LTE, 5G NR, and other D2D and sidelink technologies. The STS information may include parameters for enabling/decoding AES encryption such as STS key and counter information, as described in FIG. 10. The secure sequence q[n] is included in the out-of-band messaging. In an example, the length of the secure sequence q[n] may be the same as the length of the STS. Other sequence lengths may also be used.

At stage 1504, the method includes receiving one or more initiator data packets from the wireless node via a second radio access technology. The UE 200, including the processors 210 and the transceiver 215, is a means for receiving the one more initiator data packets. In an example, the second radio access technology may be based on UWB configurations, and the one or more initiator data packets may be included in the first ranging frame 1206 transmitted by the UE 1202. The one or more initiator data packets may be based on a UWB PHY format for ranging, such as the PPDU frame 700 including the STS 708 and the STS information may be decoded based on the STS key and counter information received to the wireless node at stage 1502. In an example vehicle use case, such as depicted in FIG. 12A, the UE 1202 may provide STS information and the secure sequence q[n] via a WiFi exchange with the vehicle 1204, and then utilize UWB to transmit the one or more initiator data packets to the vehicle 1204 including the sequence p[n], which is based on the STS. Other use cases may utilize different combinations of radio access technologies. In an example, the responder may be configured to decode the one or more initiator data packets based on the STS information (e.g., key and counter values), and determine a ToA of the one or more initiator data packets.

At stage 1506, the method includes generating one or more responder packets based on the received one or more initiator data packets and the secure sequence. The UE 200, including the processors 210, is a means for generating the one or more responder packets. The responder 510a, 510b is configured to generate a response based on the secure sequence information received at stage 1502, and the one or more initiator data packets received at stage 1504. For example, referring to FIG. 12A, the vehicle 1204 is configured to generate the sequence s[n], which is based on a time-reversed and conjugated version of the received sequence p[n] and the secure sequence q[n] as described in equation (6).

At stage 1508, the method includes transmitting one or more responder packets to the wireless node via the second radio access technology. The UE 200, including the processors 210 and the transceiver 215, is a means for transmitting the one or more responder packets. The one or more responder packets may utilize a UWB PHY format for ranging, such as PPDU frames. In the vehicle security use case depicted in FIG. 12A, the vehicle 1204 is configured to transmit the one or more responder packets including the sequence s[n] to the UE 1202, and the UE 1202 is configured to verify the integrity of the one or more responder packets based at least in part on the secure sequence q[n].

Other examples and implementations are within the scope of the disclosure and appended claims. For example, due to the nature of software and computers, functions described above can be implemented using software executed by a processor, hardware, firmware, hardwiring, or a combination of any of these. Features implementing functions may also be physically located at various positions, including being distributed such that portions of functions are implemented at different physical locations. Components, functional or otherwise, shown in the figures and/or discussed herein as being connected or communicating with each other are communicatively coupled unless otherwise noted. That is, they may be directly or indirectly connected to enable communication between them.

As used herein, the singular forms "a," "an," and "the" include the plural forms as well, unless the context clearly indicates otherwise. For example, "a processor" may include one processor or multiple processors. The terms "comprises," "comprising," "includes," and/or "including," as used herein, specify the presence of stated features, integers, steps, operations, elements, and/or components, but do not preclude the presence or addition of one or more other features, integers, steps, operations, elements, components, and/or groups thereof.

As used herein, unless otherwise stated, a statement that a function or operation is "based on" an item or condition means that the function or operation is based on the stated item or condition and may be based on one or more items and/or conditions in addition to the stated item or condition.

Also, as used herein, "or" as used in a list of items (possibly prefaced by "at least one of" or prefaced by "one or more of") indicates a disjunctive list such that, for example, a list of "at least one of A, B, or C," or a list of "one or more of A, B, or C" or a list of A or B or C" means A, or B, or C, or AB (A and B), or AC (A and C), or BC (B and C), or ABC (i.e., A and B and C), or combinations with more than one feature (e.g., AA, AAB, ABBC, etc.). Thus, a recitation that an item, e.g., a processor, is configured to perform a function regarding at least one of A or B, or a recitation that an item is configured to perform a function A or a function B, means that the item may be configured to perform the function regarding A, or may be configured to perform the function regarding B, or may be configured to perform the function regarding A and B. For example, a phrase of "a processor configured to measure at least one of A or B" or "a processor configured to measure A or measure B" means that the processor may be configured to measure A (and may or may not be configured to measure B), or may be configured to measure B (and may or may not be configured to measure A), or may be configured to measure A and measure B (and may be configured to select which, or both, of A and B to measure). Similarly, a recitation of a means for measuring at least one of A or B includes means for measuring A (which may or may not be able to measure B), or means for measuring B (and may or may not be configured to measure A), or means for measuring A and B (which may be able to select which, or both, of A and B to measure). As another example, a recitation that an item, e.g., a processor, is configured to at least one of perform function X or perform function Y means that the item may be configured to perform the function X, or may be configured to perform the function Y, or may be configured to perform the function X and to perform the function Y. For example, a phrase of "a processor configured to at least one of measure X or measure Y" means that the processor may be configured to measure X (and may or may not be configured to measure Y), or may be configured to measure Y (and may or may not be configured to measure X), or may be configured to measure X and to measure Y (and may be configured to select which, or both, of X and Y to measure). Substantial variations may be made in accordance with specific requirements. For example, customized hardware might also be used, and/or particular elements might be implemented in hardware, software (including portable software, such as applets, etc.) executed by a processor, or both. Further, connection to other computing devices such as network input/output devices may be employed.

The systems and devices discussed above are examples. Various configurations may omit, substitute, or add various procedures or components as appropriate. For instance, features described with respect to certain configurations may be combined in various other configurations. Different aspects and elements of the configurations may be combined in a similar manner. Also, technology evolves and, thus, many of the elements are examples and do not limit the scope of the disclosure or claims.

A wireless communication system is one in which communications are conveyed wirelessly, i.e., by electromagnetic and/or acoustic waves propagating through atmospheric space rather than through a wire or other physical connection. A wireless communication network may not have all communications transmitted wirelessly, but is configured to have at least some communications transmitted wirelessly. Further, the term "wireless communication device," or similar term, does not require that the functionality of the device is exclusively, or even primarily, for communication, or that the device be a mobile device, but indicates that the device includes wireless communication capability (one-way or two-way), e.g., includes at least one radio (each radio being part of a transmitter, receiver, or transceiver) for wireless communication.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations, and does not limit the scope, applicability, or configurations of the claims. Rather, the preceding description of the configurations provides a description for implementing described techniques. Various changes may be made in the function and arrangement of elements without departing from the scope of the disclosure.

The terms "processor-readable medium," "machine-readable medium," and "computer-readable medium," as used herein, refer to any medium that participates in providing data that causes a machine to operate in a specific fashion. Using a computing platform, various processor-readable media might be involved in providing instructions/code to processor(s) for execution and/or might be used to store and/or carry such instructions/code (e.g., as signals). In many implementations, a processor-readable medium is a physical and/or tangible storage medium. Such a medium may take many forms, including but not limited to, non-volatile media and volatile media. Non-volatile media include, for example, optical and/or magnetic disks. Volatile media include, without limitation, dynamic memory.

A statement that a value exceeds (or is more than or above) a first threshold value is equivalent to a statement that the value meets or exceeds a second threshold value that is slightly greater than the first threshold value, e.g., the second threshold value being one value higher than the first threshold value in the resolution of a computing system. A statement that a value is less than (or is within or below) a first threshold value is equivalent to a statement that the value is less than or equal to a second threshold value that is slightly lower than the first threshold value, e.g., the second threshold value being one value lower than the first threshold value in the resolution of a computing system.

## Claims

1. A method (1400) for determining an integrity of an ultrawideband, UWB, ranging signal, comprising:
providing (1402) scrambled timestamp sequence information and a secure sequence to a wireless node via a first radio access technology;
transmitting (1404) one or more initiator data packets including a sequence p[n] to the wireless node via a second radio access technology based at least in part on the scrambled timestamp sequence information;
receiving (1406) one or more responder data packets from the wireless node via the second radio access technology;
computing (1408) a time of arrival estimate based on a correlation of the one or more received responder data packets with the scrambled timestamp sequence information and the secure sequence wherein the one or more received responder data packets comprise a sequence s[n] which is generated based on a time-reversed and conjugated version of the received sequence p[n] and the secure sequence; and
determining (1410) the integrity of the time of arrival estimate based at least in part on the correlation of the one or more received responder data packets with the scrambled timestamp sequence information and the secure sequence.

2. The method of claim 1 wherein the first radio access technology is based on at least one of a WiFi protocol, a Bluetooth protocol, and a cellular network protocol.

3. The method of claim 1 wherein the scrambled timestamp sequence information includes a key value and a counter value associated with an encryption procedure.

4. The method of claim 1 wherein the one or more initiator data packets and the one or more responder data packets utilize a physical protocol data unit frame configuration.

5. The method of claim 1 wherein computing the time of arrival estimate includes identifying a peak value based on the correlation of the one or more received responder data packets with the scrambled timestamp sequence information and the secure sequence, and determining a time value associated with the peak value.

6. The method of claim 1 wherein determining the integrity of the time of arrival estimate includes identifying a single peak value based on the correlation of the one or more received responder data packets with the scrambled timestamp sequence information and the secure sequence.

7. The method of claim 6 further comprising determining that the single peak value exceeds a threshold value.

8. The method of claim 1 wherein determining the integrity of the time of arrival estimate includes determining a peak-to-sidelobe ratio based on the correlation of the one or more received responder data packets with the scrambled timestamp sequence information and the secure sequence or wherein determining the integrity of the time of arrival estimate includes determining a statistical value associated with the correlation of the one or more received responder data packets with the scrambled timestamp sequence information and the secure sequence in a time domain.

9. The method of claim 1 further comprising computing a controller sequence that is orthogonal to the secure sequence, wherein determining the integrity of the time of arrival estimate includes performing a generalized operation with the controller sequence and the correlation of the one or more received responder data packets with the scrambled timestamp sequence information and the secure sequence.

10. A method (1500) for transmitting a secure ultrawideband, UWB, ranging signal, comprising:
receiving (1502) scrambled timestamp sequence information and a secure sequence from a wireless node via a first radio access technology;
receiving (1504) one or more initiator data packets including a sequence p[n] from the wireless node via a second radio access technology;
generating (1506) one or more responder data packets based on the received one or more initiator data packets and the secure sequence wherein the one or more responder data packets comprise a preamble sequence and a sequence s[n] generated based on a time-reversed and conjugated version of the received sequence p[n] and the secure sequence; and
transmitting (1508) the one or more responder data packets including the sequence s[n] to the wireless node via the second radio access technology.

11. The method of claim 10 wherein the first radio access technology is based on at least one of a WiFi protocol, a Bluetooth protocol, and a cellular network protocol and/or wherein the scrambled timestamp sequence information includes a key value and a counter value associated with an encryption procedure and/or wherein the one or more initiator data packets and the one or more responder data packets utilize a physical protocol data unit frame configuration and/or wherein a length of the secure sequence is at least a length of a scrambled timestamp sequence in the one or more initiator data packets.

12. An apparatus (200, 300), comprising:
a memory (211, 311);
at least one transceiver (215, 315);
at least one processor (210, 310) communicatively coupled to the memory and the at least one transceiver, and configured to:
provide scrambled timestamp sequence information and a secure sequence to a wireless node via a first radio access technology;
transmit one or more initiator data packets including a sequence p[n] to the wireless node via a second radio access technology based at least in part on the scrambled timestamp sequence information;
receive one or more responder data packets from the wireless node via the second radio access technology;
compute a time of arrival estimate based on a correlation of the one or more received responder data packets with the scrambled timestamp sequence information and the secure sequence wherein the one or more received responder data packets comprise a sequence s[n] which is generated based on a time-reversed and conjugated version of the received sequence p[n] and the secure sequence; and
determine an integrity of the time of arrival estimate based at least in part on the correlation of the one or more received responder data packets with the scrambled timestamp sequence information and the secure sequence.

13. The apparatus of claim 12 further comprising means for performing the method of any one of claims 2 to 9.

14. An apparatus (200, 300), comprising:
a memory (211, 311);
at least one transceiver (215, 315);
at least one processor (210, 310) communicatively coupled to the memory and the at least one processor, and configured to:
receive scrambled timestamp sequence information and a secure sequence from a wireless node via a first radio access technology;
receive one or more initiator data packets including a sequence p[n] from the wireless node via a second radio access technology;
generate one or more responder data packets based on the received one or more initiator data packets and the secure sequence wherein the one or more responder data packets comprise a preamble sequence and a sequence s[n] generated based on a time-reversed and conjugated version of the received sequence p[n] and the secure sequence; and
transmit the one or more responder data packets including the sequence s[n] to the wireless node via the second radio access technology .

15. The apparatus of claim 14 further comprising further comprising means for performing the method of claim 11.

## Patentansprüche

1. Verfahren (1400) zum Bestimmen der Integrität eines UWB-(Ultrawideband)-Entfernungsmesssignals, das Folgendes beinhaltet:
Zuführen (1402) verschlüsselter Zeitstempelsequenz-Informationen und einer sicheren Sequenz zu einem drahtlosen Knoten über eine erste Funkzugangstechnologie;
Übertragen (1404) eines oder mehrerer Initiator-Datenpakete, die eine Sequenz p[n] enthalten, zu dem drahtlosen Knoten über eine zweite Funkzugangstechnologie zumindest teilweise auf der Basis der verschlüsselten Zeitstempelsequenz-Informationen;
Empfangen (1406) eines oder mehrerer Responder-Datenpakete vom drahtlosen Knoten über die zweite Funkzugangstechnologie;
Berechnen (1408) einer geschätzten Ankunftszeit auf der Basis einer Korrelation der ein oder mehreren empfangenen Responder-Datenpakete mit den verschlüsselten Zeitstempelsequenz-Informationen und der sicheren Sequenz, wobei die ein oder mehreren empfangenen Responder-Datenpakete eine Sequenz s[n] umfassen, die auf der Basis einer zeitlich umgekehrten und konjugierten Version der empfangenen Sequenz p[n] und der sicheren Sequenz erzeugt wird; und
Bestimmen (1410) der Integrität der geschätzten Ankunftszeit zumindest teilweise auf der Basis der Korrelation der ein oder mehreren empfangenen Responder-Datenpakete mit den verschlüsselten Zeitstempelsequenz-Informationen und der sicheren Sequenz.

2. Verfahren nach Anspruch 1, wobei die erste Funkzugangstechnologie auf mindestens einem von einem WiFi-Protokoll, einem Bluetooth-Protokoll und einem Mobilfunknetzprotokoll basiert.

3. Verfahren nach Anspruch 1, wobei die verschlüsselten Zeitstempelsequenz-Informationen einen Schlüsselwert und einen mit einer Verschlüsselungsprozedur assoziierten Zählwert enthalten.

4. Verfahren nach Anspruch 1, wobei die ein oder mehreren Initiator-Datenpakete und die ein oder mehreren Responder-Datenpakete eine Physische-Protokolldateneinheit-Rahmenkonfiguration verwenden.

5. Verfahren nach Anspruch 1, wobei das Berechnen der geschätzten Ankunftszeit das Identifizieren eines Spitzenwerts auf der Basis der Korrelation der ein oder mehreren empfangenen Responder-Datenpakete mit den verschlüsselten Zeitstempelsequenz-Informationen und der sicheren Sequenz sowie das Bestimmen eines mit dem Spitzenwert assoziierten Zeitwerts beinhaltet.

6. Verfahren nach Anspruch 1, wobei das Bestimmen der Integrität der geschätzten Ankunftszeit das Identifizieren eines einzelnen Spitzenwerts auf der Basis der Korrelation der ein oder mehreren empfangenen Responder-Datenpakete mit den verschlüsselten Zeitstempelsequenz-Informationen und der sicheren Sequenz beinhaltet.

7. Verfahren nach Anspruch 6, das ferner das Feststellen beinhaltet, dass der einzelne Spitzenwert einen Schwellenwert überschreitet.

8. Verfahren nach Anspruch 1, wobei das Bestimmen der Integrität der geschätzten Ankunftszeit das Bestimmen eines Spitze-zu-Nebenkeule-Verhältnisses auf der Basis der Korrelation der ein oder mehreren empfangenen Responder-Datenpakete mit den verschlüsselten Zeitstempelsequenz-Informationen und der sicheren Sequenz beinhaltet, oder wobei das Bestimmen der Integrität der geschätzten Ankunftszeit das Bestimmen eines statistischen Werts umfasst, der mit der Korrelation der ein oder mehreren empfangenen Responder-Datenpakete mit den verschlüsselten Zeitstempelsequenz-Informationen und der sicheren Sequenz in einer Zeitdomäne assoziiert ist.

9. Verfahren nach Anspruch 1, das ferner das Berechnen einer Controller-Sequenz beinhaltet, die orthogonal zur sicheren Sequenz ist, wobei das Bestimmen der Integrität der geschätzten Ankunftszeit das Durchführen einer verallgemeinerten Operation mit der Controller-Sequenz und der Korrelation der ein oder mehreren empfangenen Responder-Datenpakete mit den verschlüsselten Zeitstempelsequenz-Informationen und der sicheren Sequenz beinhaltet.

10. Verfahren (1500) zum Übertragen eines sicheren UWB-(Ultrawideband)-Entfernungsmesssignals, das Folgendes beinhaltet:
Empfangen (1502) von verschlüsselten Zeitstempelsequenz-Informationen und einer sicheren Sequenz von einem drahtlosen Knoten über eine erste Funkzugangstechnologie;
Empfangen (1504) eines oder mehrerer Initiator-Datenpakete, die eine Sequenz p[n] enthalten, von dem drahtlosen Knoten über eine zweite Funkzugangstechnologie;
Erzeugen (1506) eines oder mehrerer Responder-Datenpakete auf der Basis der empfangenen ein oder mehreren Initiator-Datenpakete und der sicheren Sequenz, wobei die ein oder mehreren Responder-Datenpakete eine Präambelsequenz und eine Sequenz s[n] umfassen, die auf der Basis einer zeitlich umgekehrten und konjugierten Version der empfangenen Sequenz p[n] und der sicheren Sequenz erzeugt wurde; und
Übertragen (1508) der ein oder mehreren Responder-Datenpakete, die die Sequenz s[n] enthalten, zu dem drahtlosen Knoten über die zweite Funkzugangstechnologie.

11. Verfahren nach Anspruch 10, wobei die erste Funkzugangstechnologie auf mindestens einem von einem WiFi-Protokoll, einem Bluetooth-Protokoll und einem Mobilfunknetzprotokoll basiert, und/oder wobei die verschlüsselten Zeitstempelsequenz-Informationen einen Schlüsselwert und einen Zählwert umfasst, die mit einer Verschlüsselungsprozedur assoziiert sind, und/oder wobei die ein oder mehreren Initiator-Datenpakete und die ein oder mehreren Responder-Datenpakete eine Physische-Protokolldateneinheit-Rahmenkonfiguration verwenden, und/oder wobei die Länge der sicheren Sequenz mindestens der Länge einer verschlüsselten Zeitstempelsequenz in den ein oder mehreren Initiator-Datenpaketen entspricht.

12. Vorrichtung (200, 300), die Folgendes umfasst:
einen Speicher (211, 311);
mindestens einen Transceiver (215, 315);
mindestens einen Prozessor (210, 310), der mit dem Speicher und dem mindestens einen Transceiver kommunikativ gekoppelt und konfiguriert ist zum:
Zuführen verschlüsselter Zeitstempelsequenz-Informationen und einer sicheren Sequenz zu einem drahtlosen Knoten über eine erste Funkzugangstechnologie;
Übertragen eines oder mehrerer Initiator-Datenpakete, die eine Sequenz p[n] enthalten, zu dem drahtlosen Knoten über eine zweite Funkzugangstechnologie zumindest teilweise auf der Basis der verschlüsselten Zeitstempelsequenz-Informationen;
Empfangen eines oder mehrerer Responder-Datenpakete vom drahtlosen Knoten über die zweite Funkzugangstechnologie;
Berechnen einer geschätzten Ankunftszeit auf der Basis einer Korrelation der ein oder mehreren empfangenen Responder-Datenpakete mit den verschlüsselten Zeitstempelsequenz-Informationen und der sicheren Sequenz, wobei die ein oder mehreren empfangenen Responder-Datenpakete eine Sequenz s[n] umfassen, die auf der Basis einer zeitlich umgekehrten und konjugierten Version der empfangenen Sequenz p[n] und der sicheren Sequenz erzeugt wird; und
Bestimmen der Integrität der geschätzten Ankunftszeit zumindest teilweise auf der Basis der Korrelation der ein oder mehreren empfangenen Responder-Datenpakete mit den verschlüsselten Zeitstempelsequenz-Informationen und der sicheren Sequenz.

13. Vorrichtung nach Anspruch 12, die ferner Mittel zum Ausführen des Verfahrens nach einem der Ansprüche 2 bis 9 umfasst.

14. Vorrichtung (200, 300), die Folgendes umfasst:
einen Speicher (211, 311);
mindestens einen Transceiver (215, 315);
mindestens einen Prozessor (210, 310), der mit dem Speicher und dem mindestens einen Transceiver kommunikativ gekoppelt und konfiguriert ist zum:
Empfangen von verschlüsselten Zeitstempelsequenz-Informationen und einer sicheren Sequenz von einem drahtlosen Knoten über eine erste Funkzugangstechnologie;
Empfangen eines oder mehrerer Initiator-Datenpakete, die eine Sequenz p[n] enthalten, von dem drahtlosen Knoten über eine zweite Funkzugangstechnologie;
Erzeugen eines oder mehrerer Responder-Datenpakete auf der Basis der empfangenen ein oder mehreren Initiator-Datenpakete und der sicheren Sequenz, wobei die ein oder mehreren Responder-Datenpakete eine Präambelsequenz und eine Sequenz s[n] umfassen, die auf der Basis einer zeitlich umgekehrten und konjugierten Version der empfangenen Sequenz p[n] und der sicheren Sequenz erzeugt wurde; und
Übertragen der ein oder mehreren Responder-Datenpakete, die die Sequenz s[n] enthalten, zu dem drahtlosen Knoten über die zweite Funkzugangstechnologie.

15. Vorrichtung nach Anspruch 14, die ferner Mittel zum Durchführen des Verfahrens nach Anspruch 11 umfasst.

## Revendications

1. Procédé (1400) de détermination d'une intégrité d'un signal de télémétrie à bande ultralarge, UWB, comprenant :
la fourniture (1402) d'informations de séquence d'horodatage brouillée et d'une séquence sécurisée à un nœud sans fil selon une première technologie d'accès radio ;
la transmission (1404) d'un ou plusieurs paquets de données initiateurs comportant une séquence p[n] au nœud sans fil selon une seconde technologie d'accès radio sur la base au moins en partie des informations de séquence d'horodatage brouillée ;
la réception (1406) d'un ou plusieurs paquets de données répondeurs à partir du nœud sans fil selon la seconde technologie d'accès radio ;
le calcul (1408) d'une estimation de temps d'arrivée sur la base d'une corrélation entre les un ou plusieurs paquets de données répondeurs reçus avec les informations de séquence d'horodatage brouillée et la séquence sécurisée dans lequel les un ou plusieurs paquets de données répondeurs reçus forment une séquence s[n] générée sur la base d'une version inversée dans le temps et conjuguée de la séquence reçue p[n] et de la séquence sécurisée ; et
la détermination (1410) de l'intégrité de l'estimation de temps d'arrivée sur la base au moins en partie de la corrélation des un ou plusieurs paquets de données répondeurs reçus avec les informations de séquence d'horodatage brouillée et la séquence sécurisée.

2. Procédé selon la revendication 1 dans lequel la première technologie d'accès radio est basée sur au moins un d'un protocole WiFi, d'un protocole Bluetooth et d'un protocole de réseau cellulaire.

3. Procédé selon la revendication 1 dans lequel les informations de séquence d'horodatage brouillée comportent une valeur clé et une valeur de compteur associée à une procédure de cryptage.

4. Procédé selon la revendication 1 dans lequel les un ou plusieurs paquets de données initiateurs et les un ou plusieurs paquets de données répondeurs utilisent une configuration de trame d'unité de données de protocole physique.

5. Procédé selon la revendication 1 dans lequel le calcul de l'estimation de temps d'arrivée comportent l'identification d'une valeur de crête sur la base de la corrélation entre les un ou plusieurs paquets de données répondeurs reçus avec les informations de séquence d'horodatage brouillée et la séquence sécurisée, et la détermination d'une valeur temporelle associée à la valeur de crête.

6. Procédé selon la revendication 1 dans lequel la détermination de l'intégrité de l'estimation de temps d'arrivée comporte l'identification d'une valeur de crête unique sur la base de la corrélation des un ou plusieurs paquets de données répondeurs reçus avec les informations de séquence d'horodatage brouillée et la séquence sécurisée.

7. Procédé selon la revendication 6 comprenant en outre la détermination que la valeur de crête unique dépasse une valeur seuil.

8. Procédé selon la revendication 1 dans lequel la détermination de l'intégrité de l'estimation de temps d'arrivée comporte la détermination d'un rapport crête/lobe secondaire sur la base de la corrélation des un ou plusieurs paquets de données répondeurs reçus avec les informations de séquence d'horodatage brouillée et la séquence sécurisée ou dans lequel la détermination de l'intégrité de l'estimation de temps d'arrivée comporte la détermination d'une valeur statistique associée à la corrélation des un ou plusieurs paquets de données répondeurs reçus avec les informations de séquence d'horodatage brouillée et la séquence sécurisée dans un domaine temporel.

9. Procédé selon la revendication 1 comprenant en outre le calcul d'une séquence de contrôleur orthogonale à la séquence sécurisée, dans lequel la détermination de l'intégrité de l'estimation de temps d'arrivée comporte la réalisation d'une opération généralisée avec la séquence de contrôleur et la corrélation des un ou plusieurs paquets de données répondeurs reçus avec les informations de séquence d'horodatage brouillée et la séquence sécurisée.

10. Procédé (1500) de transmission d'un signal de télémétrie à ultralarge bande, UWB, sécurisé, comprenant :
la réception (1502) d'informations de séquence d'horodatage brouillée et d'une séquence sécurisée à partir d'un nœud sans fil selon une première technologie d'accès radio ;
la réception (1504) d'un ou plusieurs paquets de données initiateurs comportant une séquence p[n] à partir du nœud sans fil selon une seconde technologie d'accès radio ;
la génération (1506) d'un ou plusieurs paquets de données répondeurs sur la base des un ou plusieurs paquets initiateurs reçus et de la séquence sécurisée dans lequel les un ou plusieurs paquets de données répondeurs comprennent une séquence de préambule et une séquence s[n] générée sur la base d'une version inversée dans le temps et conjuguée de la séquence reçue p[n] et de la séquence sécurisée ; et
la transmission (1508) des un ou plusieurs paquets de données répondeurs comportant la séquence s[n] au nœud sans fil selon la seconde technologie d'accès radio

11. Procédé selon la revendication 10 dans lequel la première technologie d'accès radio est basée sur au moins un d'un protocole WiFi, d'un protocole Bluetooth et d'un protocole de réseau cellulaire et/ou dans lequel les informations de séquence d'horodatage brouillée comportent une valeur clé et une valeur de compteur associées à une procédure de cryptage et/ou dans lequel les un ou plusieurs paquets de données initiateurs et les un ou plusieurs paquets de données répondeurs utilisent une configuration de trame d'unité de données de protocole physique et/ou dans lequel une longueur de la séquence sécurisée est au moins une longueur d'une séquence d'horodatage brouillée dans les un ou plusieurs paquets de données initiateurs.

12. Appareil (200, 300), comprenant :
une mémoire (211, 311) ;
au moins un émetteur-récepteur (215, 315) ;
au moins un processeur (210, 310) couplé en communication à la mémoire et à l'au moins un émetteur-récepteur, et configuré pour :
fournir des informations de séquence d'horodatage brouillée et une séquence sécurisée à un nœud sans fil selon une première technologie d'accès radio ;
transmettre un ou plusieurs paquets de données initiateurs comportant une séquence p[n] au nœud sans fil selon une seconde technologie d'accès radio sur la base au moins en partie des informations de séquence d'horodatage brouillée ;
recevoir un ou plusieurs paquets de données répondeurs à partir du nœud sans fil selon la seconde technologie d'accès radio ;
calculer une estimation de temps d'arrivée sur la base d'une corrélation des un ou plusieurs paquets de données répondeurs reçus avec les informations de séquence d'horodatage brouillée et la séquence sécurisée dans lequel les un ou plusieurs paquets de données répondeurs reçus comprennent une séquence s[n] générée à partir d'une version inversée dans le temps et conjuguée de la séquence reçue p[n] et de la séquence sécurisée ; et
déterminer une intégrité de l'estimation de temps d'arrivée sur la base au moins en partie de la corrélation des un ou plusieurs paquets de données répondeurs reçus avec les informations de séquence d'horodatage brouillée et la séquence sécurisée.

13. Appareil selon la revendication 12 comprenant en outre des moyens de réalisation du procédé selon l'une quelconque des revendications 2 à 9.

14. Appareil (200, 300), comprenant :
une mémoire (211, 311) ;
au moins un émetteur-récepteur (215, 315) ;
au moins un processeur (210, 310) couplé en communication à la mémoire et à l'au moins un processeur, et configuré pour :
recevoir des informations de séquence d'horodatage brouillée et une séquence sécurisée à partir d'un nœud sans fil selon une première technologie d'accès radio ;
recevoir un ou plusieurs paquets de données initiateurs comportant une séquence p[n] à partir du nœud sans fil selon une seconde technologie d'accès radio ;
générer un ou plusieurs paquets de données répondeurs [n] sur la base des un ou plusieurs paquets initiateurs reçus et la séquence sécurisée dans lequel les un ou plusieurs paquets de données répondeurs comprennent une séquence de préambule et une séquence s[n] générée sur la base d'une version inversée dans le temps et conjuguée d'une séquence reçue p[n] et de la séquence sécurisée ; et
transmettre les un ou plusieurs paquets de données répondeurs comportant la séquence s[n] au nœud sans fil selon la seconde technologie d'accès radio

15. Appareil selon la revendication 14 comprenant en outre des moyens de réalisation du procédé selon la revendication 11.
